(19) Europäisches Patentamt
European Patent Office
Office européen des brevets

(11) EP 3 683 882 A1

(12) **EUROPEAN PATENT APPLICATION**
published in accordance with Art. 153(4) EPC

(43) Date of publication:
**22.07.2020 Bulletin 2020/30**

(21) Application number: **18856418.1**

(22) Date of filing: **13.09.2018**

(51) Int Cl.:
***H01M 10/0562*** *(2010.01)* ***H01M 4/62*** *(2006.01)*
***H01M 10/052*** *(2010.01)* ***H01M 10/058*** *(2010.01)*

(86) International application number:
**PCT/JP2018/034050**

(87) International publication number:
**WO 2019/054455 (21.03.2019 Gazette 2019/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2017 JP 2017177578**

(71) Applicant: **FUJIFILM Corporation**
**Tokyo 106-8620 (JP)**

(72) Inventors:
- **MIMURA, Tomonori**
  **Ashigarakami-gun**
  **Kanagawa 258-8577 (JP)**
- **MOCHIZUKI, Hiroaki**
  **Ashigarakami-gun**
  **Kanagawa 258-8577 (JP)**
- **MAKINO, Masaomi**
  **Ashigarakami-gun**
  **Kanagawa 258-8577 (JP)**
- **KUSHIDA, Yo**
  **Ashigarakami-gun**
  **Kanagawa 258-8577 (JP)**

(74) Representative: **Hoffmann Eitle**
**Patent- und Rechtsanwälte PartmbB**
**Arabellastraße 30**
**81925 München (DE)**

(54) **SOLID ELECTROLYTE COMPOSITION, SOLID ELECTROLYTE-CONTAINING SHEET, ALL-SOLID-STATE SECONDARY BATTERY, METHOD FOR PRODUCING SOLID ELECTROLYTE-CONTAINING SHEET, AND METHOD FOR PRODUCING ALL-SOLID-STATE SECONDARY BATTERY**

(57) A solid electrolyte composition comprising: an inorganic solid electrolyte (A) having conductivity of ions of metals belong to Group I or II of the periodic table; a polymer (B); and a dispersion medium (C), in which the polymer (B) includes a constituent component derived from a macromonomer satisfying (Condition 1) to (Condition 3) below, a solid electrolyte-containing sheet and an all-solid state secondary battery that are obtained using the solid electrolyte composition, and methods for manufacturing a solid electrolyte-containing sheet and an all-solid state secondary battery.
(Condition 1) SP value of 19.0 MPa½ or less
(Condition 2) mass-average molecular weight of 1,000 or more, and
(Condition 3) having at least two groups represented by General Formula (1)
In the formula, R represents a hydrogen atom or a substituent.

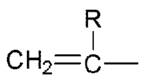
General Formula (1)

EP 3 683 882 A1

FIG. 1

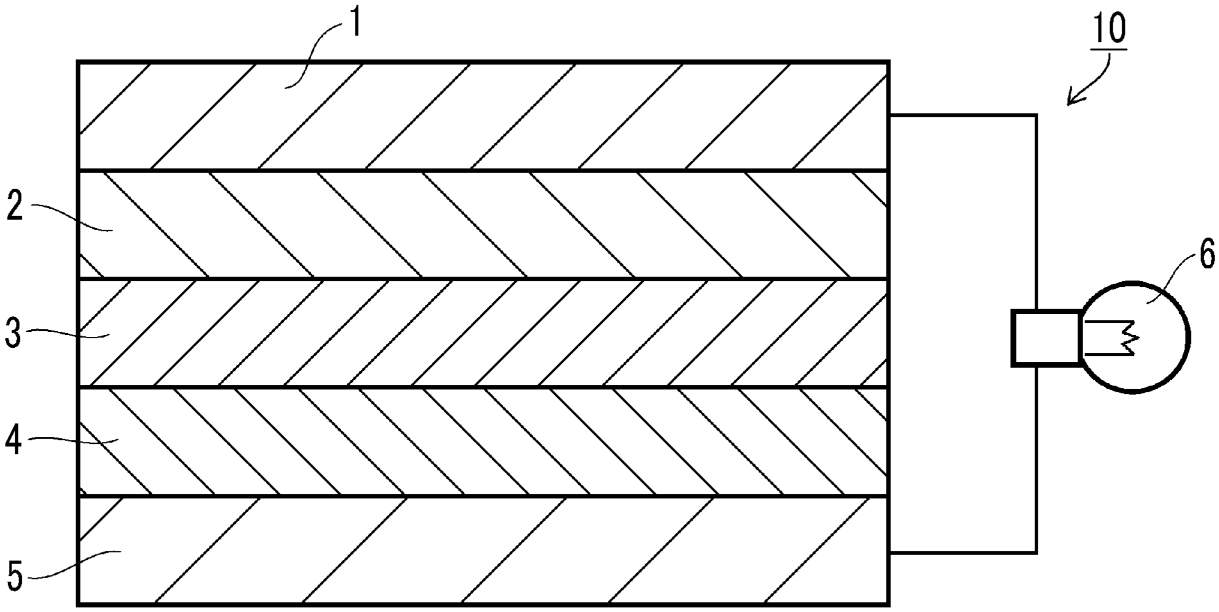

## Description

## BACKGROUND OF THE INVENTION

1. Field of the Invention

The present invention relates to a solid electrolyte composition, a solid electrolyte-containing sheet, an all-solid state secondary battery, and methods for manufacturing a solid electrolyte-containing sheet and an all-solid state secondary battery.

2. Description of the Related Art

A lithium ion secondary battery is a storage battery which has a negative electrode, a positive electrode, and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short circuit and ignition may be caused in batteries due to overcharging or overdischarging, and there is a demand for additional improvement in reliability and safety.
Under such circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety and reliability which are considered as a problem of batteries in which the organic electrolytic solution is used can be significantly improved, and it also becomes possible to extend the service lives. Furthermore, all-solid state secondary batteries can be provided with a structure in which the electrodes and the electrolyte are directly disposed in series. Therefore, it becomes possible to increase the energy density to be higher than that of secondary batteries in which the organic electrolytic solution is used, and the application to electric vehicles, large-sized storage batteries, and the like is anticipated.
Due to the respective advantages described above, development of all-solid state secondary batteries as next-generation lithium ion batteries is underway. For example, WO2012/173089A, JP2011-014387A, and JP2015-088486A describe all-solid state secondary batteries in which the state of interfaces between solid particles of an inorganic solid electrolyte or the like is adjusted using a binder.

SUMMARY OF THE INVENTION

In recent years, development of all-solid state secondary batteries has been rapidly progressing. In association with the progress of development, a demand for the performance of all-solid state secondary batteries such as the improvement of the production efficiency of all-solid state secondary batteries, the improvement of a binding property at least one of between solid particles, between individual layers, or between layer base materials (between solid particles, between individual layers, and/or between layer base materials), and the improvement of ion conductivity is intensifying.
An object of the present invention is to provide a solid electrolyte composition capable of improving the production efficiency of all-solid state secondary batteries by being excellent in terms of dispersibility and capable of not only imparting an excellent binding property at least one of between solid particles, between individual layers, or between layer base materials but also imparting a high ion conductivity to an all-solid state secondary battery to be obtained by being used as a layer constituent material of the all-solid state secondary battery. In addition, another object of the present invention is to provide a solid electrolyte-containing sheet and an all-solid state secondary battery being obtained using the solid electrolyte composition. Furthermore, still another object of the present invention is to provide individual methods for manufacturing the solid electrolyte-containing sheet and the all-solid state secondary battery.
As a result of intensive studies, the present inventors found that a solid electrolyte composition including an inorganic solid electrolyte (A) having conductivity of ions of metals belong to Group I or II of the periodic table, a polymer (B) including a constituent component derived from a macromonomer having a specific SP value and a specific mass-average molecular weight in a crosslinked portion, and a dispersion medium (C) is excellent in terms of dispersibility and is capable of not only imparting an excellent binding property at least one of between solid particles, between individual layers, or between layer base materials but also imparting a high ion conductivity to an all-solid state secondary battery to be obtained by being used as a layer constituent material of the all-solid state secondary battery. The present invention was completed by repeating additional studies on the basis of this finding.
That is, the above-described objects have been achieved by the following means.

<1> A solid electrolyte composition comprising: an inorganic solid electrolyte (A) having conductivity of ions of metals belong to Group I or II of the periodic table; a polymer (B); and a dispersion medium (C), in which the polymer (B)

includes a constituent component derived from a macromonomer satisfying (Condition 1) to (Condition 3) below.

(Condition 1) SP value of 19.0 $MPa^{1/2}$ or less
(Condition 2) mass-average molecular weight of 1,000 or more, and
(Condition 3) having at least two groups represented by General Formula (1)

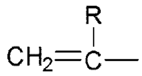
General Formula (1)

In the formula, R represents a hydrogen atom or a substituent.

<2> The solid electrolyte composition according to <1>, in which the constituent component derived from the macromonomer is a constituent unit represented by General Formula (2).

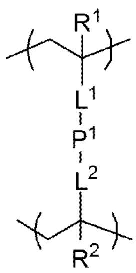
General Formula (2)

In the formula, $R^1$ and $R^2$ each independently represent a hydrogen atom, a cyano group, a halogen atom, or an alkyl group; $L^1$ and $L^2$ each independently represent a carbonyl group, an oxy group, an imino group, an alkylene group having 1 to 4 carbon atoms, a phenylene group, or a linking group formed by combining at least two of the above-described groups; and $P^1$ represents a polyalkylene group, a polysiloxane linking group, a halogen atom-containing polyalkylene group, a polyalkenylene group, a polyether group, or a polyester group.
<3> The solid electrolyte composition according to <1> or <2>, in which Clog P of the dispersion medium (C) is 3 or more.
<4> The solid electrolyte composition according to any one of <1> to <3>, in which the polymer (B) is present as particles having an average particle diameter of 10 to 1,000 nm.
<5> The solid electrolyte composition according to any one of <1> to <4>, in which the inorganic solid electrolyte (A) is represented by Formula (I).

$$L_{a1}M_{b1}P_{c1}S_{d1}A_{e1} \quad \text{Formula (I)}$$

In the formula, L represents an element selected from Li, Na, and K; M represents an element selected from B, Zn, Sn, Si, Cu, Ga, Sb, Al, and Ge; A represents an element selected from I, Br, Cl, and F; a1 to e1 represent the compositional ratios among the respective elements; and al:bl:cl:dl:el satisfies 1 to 12:0 to 5:1:2 to 12:0 to 10.
<6> The solid electrolyte composition according to any one of <1> to <5>, in which a proportion of the constituent component derived from a macromonomer in all of constituent components of the polymer (B) is 15% by mass or more and less than 40% by mass.
<7> The solid electrolyte composition according to any one of <1> to <6>, in which the polymer (B) includes a repeating unit derived from a monomer represented by Formula (a-11) or (a-12).

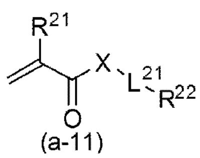
(a-11)

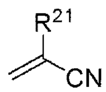
(a-12)

In the formula, $R^{21}$ represents a hydrogen atom, a cyano group, a halogen atom, or an alkyl group; X represents an oxygen atom or $>NR^N$, and $R^N$ represents a hydrogen atom or an alkyl group having 1 to 12 carbon atoms; $L^{21}$ represents a linking group; and $R^{22}$ represents a substituent.
<8> The solid electrolyte composition according to any one of <1> to <7>, in which the polymer (B) contains 30%

by mass or more of a repeating unit derived from a monomer having an SP value of 21.5 $MPa^{1/2}$ or more.

<9> The solid electrolyte composition according to any one of <1> to <8>, in which the dispersion medium (C) is at least one of a ketone compound solvent, an ether compound solvent, an ester compound solvent, or an aliphatic compound solvent (a ketone compound solvent, an ether compound solvent, an ester compound solvent, and/or an aliphatic compound solvent).

<10> The solid electrolyte composition according to any one of <1> to <9>, further comprising: an active material (D) capable of intercalating and deintercalating ions of metals belonging to Group I or II of the periodic table.

<11> A solid electrolyte-containing sheet comprising a layer made of the solid electrolyte composition according to any one of <1> to <10>.

<12> An all-solid state secondary battery comprising: a positive electrode active material layer; a negative electrode active material layer; and a solid electrolyte layer, in which at least any of the positive electrode active material layer, the negative electrode active material layer, or the solid electrolyte layer is a layer made of the solid electrolyte composition according to any one of <1> to <10>.

<13> A method for manufacturing a solid electrolyte-containing sheet comprising: a step of applying the solid electrolyte composition according to any one of <1> to <10> onto a base material.

<14> A method for manufacturing an all-solid state secondary battery which manufacture an all-solid state secondary battery, the method comprising: a step of forming at least one layer of the positive electrode active material layer, the negative electrode active material layer, or the solid electrolyte layer using the manufacturing method according to <13>.

In the present specification, numerical ranges expressed using "to" include numerical values before and after the "to" as the lower limit value and the upper limit value.

In the present specification, the term "(meth)acrylic" means at least one of methacrylic or acrylic. In addition, the term "(meth)acryloyl" means at least one of methacryloyl or acryloyl.

In the present specification, in a case in which there are a plurality of substituents and/or linking groups indicated by a specific reference or a case in which a plurality of substituents or the like (similarly, also the number of substituents) is defined simultaneously or selectively, the respective substituents or the like may be identical to or different from each other. In addition, in a case in which a plurality of substituents or the like is close to each other, the substituents or the like may bond or condense to each other to form a ring. Meanwhile, the number of carbon atoms in a substituent or the like having a substituent means the total number of carbon atoms.

The solid electrolyte composition of the present invention is excellent in terms of dispersibility and is capable of imparting a binding property at least one of between solid particles, between individual layers, or between layer base materials and ion conductivity to a solid electrolyte-containing sheet or an all-solid state secondary battery by being used as a constituent material of the solid electrolyte-containing sheet or a layer constituent material of the all-solid state secondary battery. The solid electrolyte-containing sheet and the all-solid state secondary battery of the present invention are excellent in terms of a binding property at least one of between solid particles, between individual layers, or between layer base materials and exhibit a high ion conductivity. Furthermore, the solid electrolyte-containing sheet and the all-solid state secondary battery exhibiting excellent characteristics described above can be obtained using the method for manufacturing the solid electrolyte-containing sheet and the method for manufacturing the all-solid state secondary battery of the present invention.

## BRIEF DESCRIPTION OF THE DRAWINGS

Fig. 1 is a vertical cross-sectional view schematically illustrating an all-solid state secondary battery according to a preferred embodiment of the present invention.

Fig. 2 is a vertical cross-sectional view schematically illustrating a holding device for measuring the ion conductivity produced in an example.

## DESCRIPTION OF THE PREFERRED EMBODIMENTS

<Solid electrolyte composition>

A solid electrolyte composition of an embodiment of the present invention includes an inorganic solid electrolyte (A) having conductivity of ions of metals belong to Group I or II of the periodic table, a polymer (B), and a dispersion medium (C), and the polymer (B) includes a constituent component derived from a macromonomer satisfying (Condition 1) to (Condition 3) below.

(Condition 1) SP value of 19.0 $MPa^{1/2}$ or less
(Condition 2) mass-average molecular weight of 1,000 or more, and
(Condition 3) having at least two groups represented by General Formula (1)

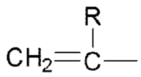
General Formula (1)

In the formula, R represents a hydrogen atom or a substituent.

Here, in a case in which the action of the solid electrolyte composition of the embodiment of the present invention is glanced, the constituent component derived from a macromonomer in the polymer (B) is understood to exhibit an action of bettering dispersibility in a solvent. Therefore, the polymer (B) is preferably dispersed in a solvent in a particle form and is thus capable of fixing the inorganic solid electrolyte without locally or fully coating the inorganic solid electrolyte. As a result, it is considered that uniform intervals are held between the particles of the polymer (B), and electrical connection between the particles is not blocked, and thus an increase in interface resistance between solid particles, between an electrode active material layer and a collector, or the like is suppressed. Furthermore, the polymer (B) has the constituent component derived from a macromonomer satisfying the (Condition 1) to (Condition 3), and thus the polymer (B) exhibits a favorable mechanical strength, and an effect for suppressing peeling which may occur during expansion and contraction during charging and discharging can also be expected. Therefore, it is considered that both the suppression of interface resistance and the improvement of a fixing property relating to the inorganic solid electrolyte can be attained. Furthermore, due to the favorable dispersibility, it is possible to omit a step of transiting the phase in an organic solvent, compared with oil-in-water polymerization or the like, and it becomes possible to use a solvent having a low boiling point as the dispersion medium.
Hereinafter, components that the solid electrolyte composition of the embodiment of the present invention contains and components that the solid electrolyte composition is capable of containing will be described.

(Inorganic solid electrolyte (A) having conductivity of ions of metals belong to Group I or II of periodic table)

The inorganic solid electrolyte is an inorganic solid electrolyte, and the solid electrolyte refers to a solid-form electrolyte capable of migrating ions therein. The inorganic solid electrolyte is clearly differentiated from organic solid electrolytes (polymer electrolytes represented by polyethylene oxide (PEO) or the like and organic electrolyte salts represented by lithium bis(tritluoromethanesulfonyl)imide (LiTFSI)) since the inorganic solid electrolyte does not include any organic substances as a principal ion-conductive material. In addition, the inorganic solid electrolyte is a solid in a static state and thus, generally, is not disassociated or liberated into cations and anions. Due to this fact, the inorganic solid electrolyte is also clearly differentiated from inorganic electrolyte salts of which cations and anions are disassociated or liberated in electrolytic solutions or polymers ($LiPF_6$, $LiBF_4$, LiFSI, LiCl, and the like). The inorganic solid electrolyte is not particularly limited as long as the inorganic solid electrolyte has conductivity of ions of metals belonging to Group I or II of the periodic table and is generally a substance not having electron conductivity. Hereinafter, the "inorganic solid electrolyte (A) having conductivity of ions of metals belong to Group I or II of the periodic table" will also be simply referred to as "inorganic solid electrolyte" or "inorganic solid electrolyte (A)".
In the present invention, the inorganic solid electrolyte has conductivity of ions of metals belonging to Group I or II of the periodic table. As the inorganic solid electrolyte, it is possible to appropriately select and use solid electrolyte materials that are applied to this kind of products. Typical examples of the inorganic solid electrolyte include (i) sulfide-based inorganic solid electrolytes and (ii) oxide-based inorganic solid electrolytes. In the present invention, the sulfide-based inorganic solid electrolytes are preferably used since it is possible to form a more favorable interface between the active material and the inorganic solid electrolyte.

(i) Sulfide-based inorganic solid electrolytes

Sulfide-based inorganic solid electrolytes are preferably compounds which contain sulfur atoms (S), have ion conductivity of metals belonging to Group I or II of the periodic table, and have electron-insulating properties. The sulfide-based inorganic solid electrolytes are preferably inorganic solid electrolytes which, as elements, contain at least Li, S, and P and have a lithium ion conductivity, but the sulfide-based inorganic solid electrolytes may also include elements other than Li, S, and P depending on the purposes or cases.
Examples thereof include lithium ion-conductive inorganic solid electrolytes satisfying a composition represented by Formula (1).

$L_{a1}M_{b1}P_{c1}S_{d1}A_{e1}$ Formula (I)

In the formula, L represents an element selected from Li, Na, and K and is preferably Li. M represents an element selected from B, Zn, Sn, Si, Cu, Ga, Sb, Al, and Ge. A represents an element selected from I, Br, Cl, and F. a1 to el represent the compositional ratios among the respective elements, and a1:b1:c1:d1:e1 satisfies 1 to 12:0 to 5:1:2 to 12:0 to 10. Furthermore, a1 is preferably 1 to 9 and more preferably 1.5 to 7.5. bl is preferably 0 to 3 and more preferably 0 to 1. Furthermore, dl is preferably 2.5 to 10 and more preferably 3.0 to 8.5. Furthermore, el is preferably 0 to 5 and more preferably 0 to 3.

The compositional ratios among the respective elements can be controlled by adjusting the ratios of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio between $Li_2S$ and $P_2S_5$ in Li-P-S-based glass and Li-P-S-based glass ceramic is preferably 60:40 to 90:10 and more preferably 68:32 to 78:22 in terms of the molar ratio between $Li_2S$:$P_2S_5$. In a case in which the ratio between $Li_2S$ and $P_2S_5$ is set in the above-described range, it is possible to increase the lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited, but realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$SiS_2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, $Li_{10}GeP_2S_{12}$, and the like. Mixing ratios of the respective raw materials do not matter. Examples of a method for synthesizing sulfide-based inorganic solid electrolyte materials using the above-described raw material compositions include an amorphorization method. Examples of the amorphorization method include a mechanical milling method, a solution method, and a melting quenching method. This is because treatments at a normal temperature become possible, and it is possible to simplify manufacturing steps.

(ii) Oxide-based inorganic solid electrolytes

Oxide-based inorganic solid electrolytes are preferably compounds which contain oxygen atoms (O), have an ion conductivity of metals belonging to Group I or II of the periodic table, and have electron-insulating properties.

Specific examples of the compounds include $Li_{xa}La_{ya}TiO_3$ [xa = 0.3 to 0.7 and ya = 0.3 to 0.7] (LLT), $Li_{xb}La_{yb}Zr_{zb}M^{bb}_{mb}O_{nb}$ ($M^{bb}$ is at least one element of Al, Mg, Ca, Sr, V, Nb, Ta, Ti, Ge, In or Sn, xb satisfies $5 \leq xb \leq 10$, yb satisfies $1 \leq \leq yb \leq 4$, zb satisfies $1 \leq zb \leq 4$, mb satisfies $0 \leq mb \leq 2$, and nb satisfies $5 \leq nb \leq 20$.), $Li_{xc}B_{yc}M^{cc}_{zc}O_{nc}$ ($M^{cc}$ is at least one element of C, S, Al, Si, Ga, Ge, In, or Sn, xc satisfies $0 \leq xc \leq 5$, yc satisfies $0 \leq yc \leq 1$, zc satisfies $0 \leq zc \leq 1$, and nc satisfies $0 \leq nc \leq 6$), $Li_{xd}(Al, Ga)_{yd}(Ti, Ge)_{zd}Si_{ad}P_{md}O_{nd}$ ($1 \leq xd \leq 3$, $0 \leq yd \leq 1$, $0 \leq zd \leq 2$, $0 \leq ad \leq 1$, $1 \leq md \leq 7$, $3 \leq nd \leq 13$), $Li_{(3-2xe)}M^{ee}_{xe}D^{ee}O$ (xe represents a number of 0 or more and 0.1 or less, and $M^{ee}$ represents a divalent metal atom. $D^{ee}$ represents a halogen atom or a combination of two or more halogen atoms.), $Li_{xf}Si_{yf}O_{zf}$ ($1 \leq xf \leq 5$, $0 \leq yf \leq 3$, $1 \leq zf \leq 10$), $Li_{xg}S_{yg}O_{zg}$ ($1 \leq xg \leq 3$, $0 < yg \leq 2$, $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2w)}N_w$ (w satisfies w<1), $Li_{3.5}Zn_{0.25}GeO_4$ having a lithium super ionic conductor (LISICON)-type crystal structure, $La_{0.55}Li_{0.35}TiO_3$ having a perovskite-type crystal structure, $LiTi_2P_3O_{12}$ having a natrium super ionic conductor (NASICON)-type crystal structure, $Li_{1+xh+yh}(Al, Ga)_{xh}(Ti, Ge)_{2-xh}Si_{yh}P_{3-yh}O_{12}$($0 \leq xh \leq 1$, $0 \leq yh \leq 1$), $Li_7La_3Zr_2O_{12}$ (LLZ) having a garnet-type crystal structure. In addition, phosphorus compounds containing Li, P and O are also desirable. Examples thereof include lithium phosphate ($Li_3PO_4$), LiPON in which some of oxygen atoms in lithium phosphate are substituted with nitrogen, $LiPOD^1$ ($D^1$ is at least one element selected from Ti, V, Cr, Mn, Fe, Co, Ni, Cu, Zr, Nb, Mo, Ru, Ag, Ta, W, Pt, Au, or the like), and the like. It is also possible to preferably use $LiA^1ON$ ($A^1$ represents at least one element selected from Si, B, Ge, Al, C, Ga, or the like) and the like.

The volume-average particle diameter of the inorganic solid electrolyte is not particularly limited, but is preferably 0.01 $\mu$m or more and more preferably 0.1 $\mu$m or more. The upper limit is preferably 100 $\mu$m or less and more preferably 50 $\mu$m or less. Meanwhile, the average particle diameter of the inorganic solid electrolyte particles is measured in the following order. The inorganic solid electrolyte particles are diluted and adjusted to one percent by mass of a dispersion liquid by using water (heptane in a case in which the inorganic solid electrolyte is unstable in water) in a 20 ml sample

bottle. The diluted dispersion specimen is irradiated with 1 kHz ultrasonic waves for 10 minutes and is then immediately used for testing. Data capturing is carried out 50 times using this dispersion liquid specimen, a laser diffraction/scattering-type particle size distribution measurement instrument LA-920 (manufactured by Horiba Ltd.), and a silica cell for measurement at a temperature of 25°C, thereby obtaining the volume-average particle diameter. Regarding other detailed conditions and the like, the description of JIS Z8828:2013 "Particle size analysis-Dynamic light scattering method" is referred to as necessary. Five specimens are produced and measured per level, and the average values thereof are employed.

In a case in which a decrease in the interface resistance and the maintenance of the decreased interface resistance in the case of being used in the all-solid state secondary battery are taken into account, the content of the inorganic solid electrolyte in the solid component of the solid electrolyte composition is preferably 5% by mass or more, more preferably 10% by mass or more, and particularly preferably 20% by mass or more with respect to 100% by mass of the solid components. From the same viewpoint, the upper limit is preferably 99.9% by mass or less, more preferably 99.5% by mass or less, and particularly preferably 99% by mass or less.

These inorganic solid electrolytes may be used singly or two or more inorganic solid electrolytes may be used in combination.

However, in a case in which the solid electrolyte composition contains an active material described below, regarding the content of the inorganic solid electrolyte in the solid electrolyte composition, the total content of the active material and the inorganic solid electrolyte is preferably in the above-described range.

Meanwhile, the solid content (solid component) in the present specification refers to a component that does not volatilize or evaporate and thus disappear in the case of being subjected to a drying treatment in a nitrogen atmosphere at 170°C for six hours. Typically, the solid content refers to a component other than a dispersion medium described below.

(Polymer (B))

The polymer (B) that is used in the present invention includes a constituent component derived from a macromonomer satisfying (Condition 1) to (Condition 3) below.

(Condition 1) SP value of 19.0 $MPa^{1/2}$ or less

The SP value of the macromonomer that is used in the present invention is 19.0 $MPa^{1/2}$ or less in order to impart dispersibility at the time of dispersing the polymer (B) in a particle form. The lower limit of the SP value is not particularly limited, but is preferably 10 $MPa^{1/2}$ or more and more preferably 16 $MPa^{1/2}$ or more.

- Definition of SP value -

In the present specification, unless particularly otherwise described, the SP value is obtained using a Hoy method (H. L. Hoy Journal of Painting, 1970, Vol. 42, pp. 76 to 118).

In the present invention, the SP value ($SP_p$) of a polymer is a value computed from the following expression in a case in which the SP values of individual repeating units constituting the polymer are respectively represented by $SP_1$, $SP_2$, ···, and the mass ratios of the individual repeating units are represented by $W_1$, $W_2$, ···.

$$SP_P^2 = SP_1^2, x W_1 + SP_2^2, x W_2 + \cdots$$

The SP value serves as an index indicating a characteristic for dispersing the polymer in the dispersion medium (C). In the solid electrolyte composition of the embodiment of the present invention, in a case in which the mass-average molecular weight of the macromonomer is set to 1,000 or more (Condition 2) and, preferably, the above-described SP value or more is set, it is possible to improve the binding property with the inorganic solid electrolyte, thus, enhance the affinity to the dispersion medium (C), and stably disperse the polymer.

(Condition 2) mass-average molecular weight of 1,000 or more

The mass-average molecular weight of the macromonomer that is used in the present invention is 1,000 or more, preferably 2,000 or more, and more preferably 3,000 or more. The upper limit is preferably 500,000 or less, more preferably 100,000 or less, and particularly 30,000 or less.

- Measurement of molecular weight -

In the present invention, unless particularly otherwise described, the molecular weights of the macromonomer and the polymer (B) refer to a mass-average molecular weight and are a standard polystyrene-equivalent mass-average molecular weight measured by gel permeation chromatography (GPC). Regarding a measurement method, basically, a value measured using a method under Conditions A or Conditions B (preferred) described below is employed. However, depending on the kinds of the macromonomer and the polymer (B), an appropriate eluent may be appropriately selected and used.

(Conditions A)

Column: Two TOSOH TSKgel SuperAWM-H's (trade name) are connected to each other.
Carrier: 10 mM LiBr/N-methyl pyrrolidone
Measurement temperature: 40°C
Carrier flow rate: 1.0 mL/min
Concentration of specimen: 0.1% by mass
Detector: Refractive index (RI) detector

(Conditions B) Preferred

Column: A column obtained by connecting TOSOH TSKgel SuperHZM-H (trade name), TOSOH TSKgel SuperHZ4000 (trade name), and TOSOH TSKgel SuperHZ2000 (trade name) is used.
Carrier: Tetrahydrofuran
Measurement temperature: 40°C
Carrier flow rate: 1.0 mL/min
Concentration of specimen: 0.1% by mass
Detector: Refractive index (RI) detector

(Condition 3) The macromonomer that is used in the present invention has at least two groups represented by General Formula (1).

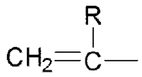 General Formula (1)

In the formula, R represents a hydrogen atom or a substituent.

Specific examples of the substituent include a cyano group, a halogen atom (for example, a fluorine atom, a chlorine atom, a bromine atom, or an iodine atom), and an alkyl group.

The halogen atom is preferably a fluorine atom or a chlorine atom and more preferably a chlorine atom.

The alkyl group may have a chain shape or a cyclic shape, and the number of carbon atoms is preferably 1 to 12, more preferably 1 to 6, still more preferably 1 to 3, and particularly preferably 1. Specific examples of the alkyl group include methyl, ethyl, i-propyl, and t-butyl.

The R preferably represents a hydrogen atom, a cyano group, a halogen atom, or an alkyl group, more preferably represents a hydrogen atom, a cyano group, or an alkyl group having 1 to 3 carbon atoms, and particularly preferably represents a hydrogen atom or a methyl group.

The number of the groups represented by General Formula (1) that the macromonomer that is used in the present invention has is preferably 2 to 10,000, more preferably 2 to 500, still more preferably 2 to 100, far still more preferably 2 to 50, far still more preferably 2 to 10, and particularly preferably 2. In addition, the macromonomer that is used in the present invention preferably has the groups represented by General Formula (1) at both terminals of a main chain.

In the present specification, the "main chain of the macromonomer" refers to a linear molecular chain among all of molecular chains in the macromonomer, in which all of molecular chains (at least one of long molecular chains or short molecular chains) other than the main chain can be regarded as pendants with respect to the main chain. Typically, the longest chain among the molecular chains constituting the macromonomer is the main chain.

The polymer (B) that is used in the present invention preferably includes a constituent component represented by General Formula (2).

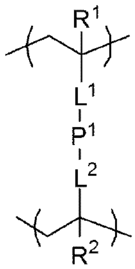

General Formula (2)

In the formula, $R^1$ and $R^2$ each independently represent a hydrogen atom, a cyano group, a halogen atom, or an alkyl group. The alkyl group is identical to the alkyl group that can be employed as R in General Formula (1), and a preferred range thereof is also identical thereto.

$R^1$ and $R^2$ each independently preferably represent a hydrogen atom, a cyano group, or an alkyl group having 1 to 3 carbon atoms, more preferably represent a hydrogen atom or an alkyl group having 1 to 3 carbon atoms, and particularly preferably represent a hydrogen atom or a methyl group.

In the formula, $L^1$ and $L^2$ each independently represent a carbonyl group, an oxy group, an imino group, an alkylene group having 1 to 4 carbon atoms, phenylene group, or a combination of two or more of the above-described groups, a combination of an ester group (carbonyloxy group) and an alkylene group having 1 to 4 carbon atoms, a combination of an amide group (carbonylimino group) and an alkylene group having 1 to 4 carbon atoms, a combination of an ester group, an alkylene group having 1 to 4 carbon atoms, and an imino group (for example, -carbonyloxy-alkylene having 1 to 4 carbon atoms-imino-carbonyloxy-alkylene having 1 to 4 carbon atoms-), and a combination of a phenylene group, an alkylene group having 1 to 4 carbon atoms, and an imino group (for example, -phenylene-alkylene having 1 to 4 carbon atoms-imino-alkylene having 1 to 4 carbon atoms-) are preferred, and a combination of an ester group and an alkylene group having 1 to 4 carbon atoms and a combination of an ester group, an alkylene group having 1 to 4 carbon atoms, and an imino group are particularly preferred.

$P^1$ represents a polyalkylene group (poly(alkylene) group), a polysiloxane linking group (polysiloxane-containing group), a halogen atom-containing polyalkylene group (halogen atom-containing poly(alkylene) group), a polyalkenylene group (poly(alkenylene) group), a polyether group (polyether-containing group), or a polyester group (polyester-containing group), preferably represents a polyalkylene group, a polysiloxane linking group, or a halogen atom-containing polyalkylene group, more preferably represents a polysiloxane linking group or a polyalkylene group, and particularly preferably represents a polyalkylene group. $P^1$ preferably has, as a substituent, an alkyl group having 1 to 3 carbon atoms and more preferably has an alkyl group having 2 or 3 carbon atoms.

The molecular weight of $P^1$ is not particularly limited, but is preferably 1,000 to 100,000 and more preferably 2,000 to 10,000.

The constituent component represented by General Formula (2) is preferably a constituent component represented by General Formula (3).

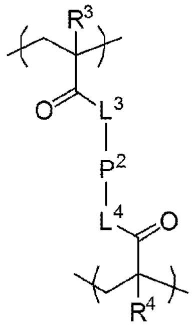

General Formula (3)

In the formula, $R^3$ and $R^4$ represent a hydrogen atom or an alkyl group (preferably an alkyl group having 1 to 3 carbon atoms and more preferably a methyl group).

In the formula, $L^3$ and $L^4$ each independently represent a combination of an oxy group and an alkylene group having 1 to 4 carbon atoms, a combination of an oxy group, an alkylene group having 1 to 4 carbon atoms, an imino group, and an ester group (carbonyloxy group) (for example, -oxy-alkylene having 1 to 4 carbon atoms-imino-carbonyloxy-alkylene having 1 to 4 carbon atoms-), a combination of an imino group, an oxy group, an imino group, and an alkylene group having 1 to 4 carbon atoms, or a combination of a phenylene group, an alkylene group having 1 to 4 carbon atoms, and an imino group (for example, -oxy-alkylene having 1 to 4 carbon atoms-imino-alkylene having 1 to 4 carbon atoms-),

and a combination of an ester group and an alkylene group having 1 to 4 carbon atoms and a combination of an oxy group and an alkylene group having 1 to 4 carbon atoms or a combination of an oxy group, an alkylene group having 1 to 4 carbon atoms, an imino group, and an ester group (carbonyloxy group) is preferred.

In the formula, $P^2$ represents a polyalkylene group, a polysiloxane linking group, a polyalkenylene group, or a halogen-containing polyalkylene group, preferably represents a polysiloxane linking group or a polyalkylene group, and particularly preferably represents a polyalkylene group. $P^2$ preferably has, at a side chain, an alkyl group having 1 to 3 carbon atoms and particularly preferably has an alkyl group having 2 or 3 carbon atoms.

In addition, the proportion of the constituent component derived from the macromonomer in all of the constituent components of the polymer (B) is preferably 15% by mass or more and more preferably 20% by mass or more from the viewpoint of imparting dispersibility and imparting adhesion. The upper limit is preferably 50% by mass or less and more preferably less than 40% by mass. The proportion can be computed from, for example, the mass of a monomer that is used for the synthesis of the polymer (B).

The macromonomer that is used in the present invention can be synthesized using a normal method.

A method for synthesizing the macromonomer is not particularly limited, and, for example, the macromonomer can be synthesized by reacting a compound having the group represented by Formula (1) (for example, a vinyl group) with both terminals of a both-terminal-modified polymer. Specifically, the macromonomer can be synthesized by a reaction between a terminal-modified group in a both-terminal-modified polymer (preferably the following terminal-modified group) and a functional group in a vinyl group-containing compound (preferably a functional group that the following vinyl group-containing compound contains and is capable of forming a bond by a reaction with a terminal-modified group).

As the both-terminal-modified polymer, both-terminal-modified polybutadiene, both-terminal-modified hydrogenated polybutadiene, both-terminal-modified polyisoprene, both-terminal-modified hydrogenated polyisoprene, both-terminal-modified polysiloxane, both-terminal-modified poly(styrene-co-butadiene), and both-terminal-modified hydrogenated poly(styrene-co-butadiene) are exemplified, and both-terminal-modified hydrogenated polybutadiene and both-terminal-modified hydrogenated polyisoprene are preferred. As the terminal-modified group, a hydroxy group, an epoxy group, an amino group, a carboxy group, and an isocyanato group are exemplified, and a hydroxy group and an amino group are preferred.

Specific examples of the both-terminal-modified polymer include EPOL series (both-terminal hydroxy group-modified hydrogenated polyisoprene) manufactured by Idemitsu Kosan Co., Ltd., Krasol series (both-terminal hydroxy group-modified polybutadiene) manufactured by Clay Valley, Ricon657 (both-terminal epoxy group-modified polybutadiene) manufactured by Clay Valley, NISSO-PBG series (both-terminal hydroxy group-modified polybutadiene) manufactured by Nippon Soda Co., Ltd., NISSO-PBGI series (both-terminal hydroxy group-modified hydrogenated polybutadiene) manufactured by Nippon Soda Co., Ltd., NISSO-PBTP series (both-terminal isocyanate group-modified polybutadiene), and KF series (both-terminal hydroxy group-modified polydimethylsiloxane) manufactured by Shin-Etsu Chemical Co., Ltd. (all trade names).

Examples of the vinyl group-containing compound include (meth)acrylic acid chloride, 2-isocyanatoethyl (meth)acrylate, hydroxyethyl (meth)acrylate, hydroxybutyl (meth)acrylate, glycidyl methacrylate, acrylic acid, β-carboxyethyl acrylate, succinic acid mono(2-acryloyloxyethyl), and 4-vinylbenzylamine.

In addition, as the macromonomer, a commercially available product may be used. Examples thereof include NISSO-PBTE series (trade name, both-terminal acryloyl group-modified hydrogenated polybutadiene and both-terminal methacryloyl group-modified polybutadiene) manufactured by Nippon Soda Co., Ltd.

Hereinafter, specific examples of the macromonomer that is used in the present invention will be exemplified, but the present invention is not limited thereto.

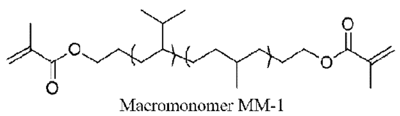

Macromonomer MM-1

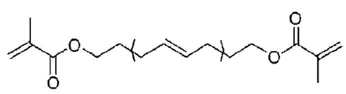

Macromonomer MM-6

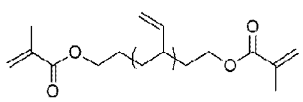

Macromonomer MM-2

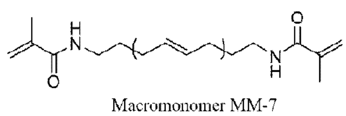

Macromonomer MM-7

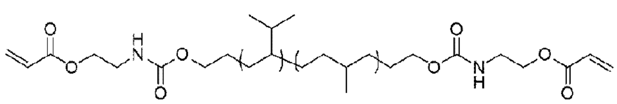

Macromonomer MM-3

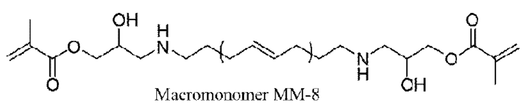

Macromonomer MM-8

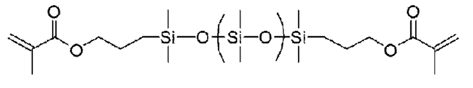

Macromonomer MM-4

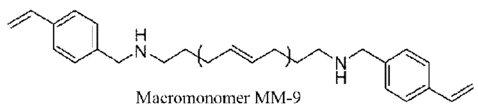

Macromonomer MM-9

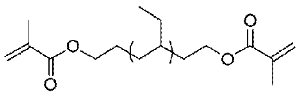

Macromonomer MM-5

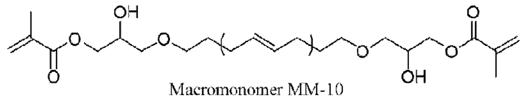

Macromonomer MM-10

The macromonomer may be used singly or two or more macromonomers may be used in combination.

The shape of the polymer (B) that is used in the present invention is not particularly limited and may be a particle or an irregular shape in the solid electrolyte composition, a solid electrolyte-containing sheet, or an all-solid state secondary battery.

In the present invention, the polymer (B) is preferably a particle that is insoluble in the dispersion medium (C) from the viewpoint of the dispersion stability of the solid electrolyte composition and the viewpoint of obtaining an all-solid state secondary battery having a high ion conductivity. Here, the expression "the polymer (B) is present as particles that are insoluble in the dispersion medium (C)" means that, even in a case in which the polymer (B) is added to the dispersion medium (30°C) so as to obtain a content of 3% by mass and left to stand for 24 hours, the average particle diameter does not decrease by 10% or more. The average particle diameter preferably does not decrease by 5% or more and more preferably does not decrease by 1% or more.

In addition, the polymer (B) in the solid electrolyte composition is preferably a particle in order to suppress a decrease in the ion conductivity between the particles of the inorganic solid electrolyte or the like, and the average particle diameter is preferably 10 to 1,000 nm and more preferably 100 to 500 nm.

The average particle diameter of the particles of the polymer (B) that is used in the present invention is, unless particularly otherwise described, defined to be based on measurement conditions and a definition described below.

The particles of the polymer (B) are diluted in a 20 mL sample bottle using a random solvent (the dispersion medium that is used for preparation of the solid electrolyte composition, for example, heptane), thereby preparing 1% by mass of a dispersion liquid. The diluted dispersion specimen is irradiated with 1 kHz ultrasonic waves for 10 minutes and is then immediately used for testing. Data capturing is carried out 50 times using this dispersion liquid specimen, a laser diffraction/scattering-type particle size distribution measurement instrument LA-920 (trade name, manufactured by Horiba Ltd.), and a silica cell for measurement at a temperature of 25°C, and the obtained volume-average particle diameter is used as the average particle diameter. Regarding other detailed conditions and the like, the description of JIS Z8828:2013 "Particle size analysis-Dynamic light scattering method" is referred to as necessary. Five specimens are produced and measured per level, and the average values thereof are employed.

Meanwhile, the average particle diameter can be measured from the produced all-solid state secondary battery by, for example, disassembling the battery, peeling the electrodes off, then, measuring the average particle diameters of the electrode materials according to the above-described method for measuring the average particle diameter of the polymer (B) particles, and excluding the measurement value of the average particle diameter of particles other than the polymer (B) particles which has been measured in advance.

The mass-average molecular weight of the polymer (B) is preferably 5,000 or more and less than 5,000,000, more preferably 5,000 or more and less than 500,000, and still more preferably 5,000 or more and less than 100,000.

Regarding the glass transition temperature of the polymer (B), the upper limit is preferably 80°C or lower, more preferably 50°C or lower, and still more preferably 30°C or lower. The lower limit is not particularly limited and generally -80°C or higher.

The polymer (B) may be used in a solid state or a particle dispersion liquid of the polymer (B) may be used, but the particle dispersion liquid is preferably preferred.

The content of the polymer (B) in the solid electrolyte composition is preferably 0.01% by mass or more, more preferably 0.1% by mass or more, and still more preferably 1% by mass or more with respect to 100% by mass of the solid component from the viewpoint of a binding property with a solid particle and the ion conductivity. From the viewpoint of battery characteristics, the upper limit is preferably 20% by mass or less, more preferably 10% by mass or less, and still more preferably 7% by mass or less.

In the solid electrolyte composition of the embodiment of the present invention, the mass ratio of the total mass (total amount) of the inorganic solid electrolyte and the active material to the mass of the polymer (B) [(mass of inorganic solid electrolyte and mass of active material)/mass of (B) binder] is preferably in a range of 1,000 to 1. Furthermore, this ratio is more preferably 500 to 2 and still more preferably 100 to 10.

The polymer (B) preferably has one or more repeating units other than the constituent component derived from the macromonomer. The structure of the repeating unit is not particularly limited. In addition, in a case in which the

polymer has two or more repeating units, the mass ratio between the repeating units is also not particularly limited. Such a repeating unit is preferably a repeating unit derived from a monomer having an SP value of 21.5 ($MPa^{½}$), more preferably a repeating unit derived from a monomer having an SP value of 22.0 ($MPa^{½}$), and particularly preferably a repeating unit derived from a monomer having an SP value of 22.5 ($MPa^{½}$). The upper limit value of the SP value is not particularly limited, but is preferably 30 $(MPa)^{½}$ or less. The proportion of the repeating unit in all of the constituent components of the polymer (B) is preferably 20% by mass or more, more preferably 30% by mass or more, and particularly preferably 40% by mass or more. The upper limit is preferably 90% by mass or less and more preferably 80% by mass or less. The total of the contents of the constituent component derived from the macromonomer and the repeating unit is 100% by mass.

In addition, the repeating unit that the polymer (B) has other than the constituent component derived from the macromonomer is preferably a repeating unit derived from a monomer represented by Formula (a-11) or (a-12) and more preferably a repeating unit derived from a monomer represented by Formula (a-11). The SP value of the monomer represented by Formula (a-11) or (a-12) is preferably in the above-described range, the content in all of the constituent components of the polymer (B) is the same as described above, and a preferred range thereof is also identical thereto. The monomer represented by Formula (a-11) or (a-12) may be used singly or two or more monomers may be used in combination.

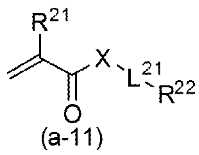
(a-11)

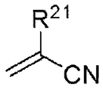
(a-12)

In the formula, $R^{21}$ is identical to $R^1$ in General Formula (2), and a preferred range thereof is also identical thereto.

$R^{22}$ represents a substituent. As the substituent, a substituent T described below is exemplified. Among them, an alkyl group having 1 to 6 carbon atoms, a phenyl group, a carboxy group, a hydroxy group, a sulfonic acid group, a phosphoric acid group, an aliphatic heterocyclic group containing an oxygen atom, an amino group, and an ammonio group are preferred, an alkyl group having 1 to 6 carbon atoms, a carboxy group, a phosphoric acid group, a hydroxy group, and an ammonio group are more preferred, and an alkyl group having 1 to 3 carbon atoms, a carboxy group, a hydroxy group, and an ammonio group are still more preferred, and an alkyl group having 1 to 3 carbon atoms, a carboxy group, and a hydroxy group are particularly preferred.

$L^{21}$ represents a linking group. $L^{21}$ preferably represents a single bond, a hydrocarbon linking group [an alkylene group having 1 to 10 carbon atoms (more preferably having 1 to 6 carbon atoms and still more preferably having 2 to 4 carbon atoms), an alkenylene group having 2 to 10 carbon atoms (more preferably having 2 to 6 carbon atoms and still more preferably having 2 to 4 carbon atoms).), an alkynylene group having 2 to 10 carbon atoms (more preferably having 2 to 6 carbon atoms and still more preferably having 2 to 4 carbon atoms), an arylene group having 6 to 22 carbon atoms (more preferably having 6 to 10 carbon atoms), or a combination thereof], a hetero linking group [carbonyl group (-CO-), a thiocarbonyl group (-CS-), an ether group (-O-), a thioether group (-S-), an imino group ($-NR^N-$), an ammonium linking group ($-NR^N{}_2{}^+-$), a polysulfide group (the number of S is 1 to 8), an imine linking group ($R^N$-N=C<, -N=C($R^N$)-), a sulfonyl group ($-SO_2-$), a sulfinyl group (-SO-), a phosphoric acid linking group (-O-P(OH)(O)-O-), a phosphonic acid linking group (-P(OH)(O)-O-), or a combination thereof), or a linking group formed by combining the above-described groups.

$L^{21}$ more preferably represents a single bond, an alkylene group (preferably having 1 to 6 carbon atoms and more preferably having 2 to 4 carbon atoms), a carbonyl group, an ether group, an imino group, or a linking group formed by combining the above-described groups, is preferably a single bond, an alkylene group having 2 to 4 carbon atoms, alkylene group having 2 to 4 carbon atoms-ether group-carbonyl group-alkylene group having 2 to 4 carbon atoms (combination), a (poly)alkyleneoxy group having 6 to 1000 carbon atoms (an alkyleneoxy group or a (poly)alkyleneoxy group having an alkyleneoxy group as a repeating unit the number of which is two or more) or a (poly)ester group having 4 to 500 carbon atoms (a group containing an ester bond or a polyester group containing an ester bond and having two or more repeating units), and particularly preferably a single bond, an alkylene group having 2 to 4 carbon atoms, alkylene group having 2 to 4 carbon atoms-ether group-carbonyl group-alkylene group having 2 to 4 carbon atoms (combination), or a poly(alkyleneoxy) group having 6 to 1000 carbon atoms.

Meanwhile, in a case in which substituents or linking groups condense together to form a ring, the hydrocarbon linking group may appropriately form a double bond or a triple bond to link the substituents or the linking groups. As a ring to be formed, a five-membered ring or a six-membered ring is preferred. The five-membered ring is preferably a nitrogen-containing five-membered ring, and examples of a compound forming the ring include pyrrole, imidazole, pyrazole, indazole, indole, benzimidazole, pyrrolidine, imidazolidine, pyrazolidine, indoline, carbazole, derivatives thereof, and the like. As the six-membered ring, piperidine, morpholine, piperazine, derivatives thereof, and the like are exemplified. In addition, in a case in which an aryl group, a heterocyclic group, or the like is included, these group may be a single ring or a fused ring and, similarly, may or may not be substituted.

X represents a single bond, an oxygen atom, or $NR^N$ and preferably represents a single bond or an oxygen atom. $R^N$ represents a hydrogen atom or an alkyl group having 1 to 12 carbon atoms and is preferably a hydrogen atom or a methyl group.

Hereinafter, examples of the monomer having an SP value of 21.5 ($MPa^{1/2}$) or more will be exemplified together with SP values.

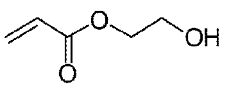
SP Value: 25.0

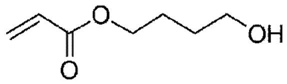
SP Value: 21.9

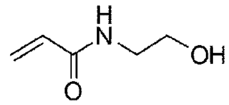
SP Value: 27.0

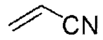
SP Value: 27.2

The polymer (B) preferably has a hydroxy group or a carboxy group. In a case in which this specific group is included, the affinity (wetting property) to the sulfide-based inorganic solid electrolyte becomes more favorable, and a more favorable binding property and a more favorable ion conductivity can be realized.

The polymer (B) including a component derived from an acrylic monomer (the monomer represented by Formula (a-11)) may include a component derived from a vinyl-based monomer. The vinyl-based monomer is not particularly limited as long as the vinyl-based monomer is a monomer having a non-aromatic carbon-unsaturated bond (excluding the above-described acrylic monomer). Examples thereof include a styrene monomer, a vinyl ether monomer, a cyclic olefin monomer (norbornene or the like), a diene monomer, the monomer represented by Formula (a-12), and the like. The above-described monomers may further have a substituent. As the substituent, the substituent T described below is exemplified, and, among them, a halogen atom (preferably a fluorine atom or a chlorine atom), an alkyl group, an acyl group, a carbamoyl group, a hydroxy group, or a carboxy group is preferred.

Hereinafter, examples of the acrylic monomer and the vinyl-based monomer will be exemplified, but the present invention is not limited thereto. In formulae, n represents an integer of 1 to 1,000,000 and is preferably an integer of 1 to 10,000, more preferably an integer of 1 to 500, and particularly preferably an integer of 1 to 20.

A-1
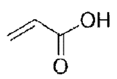
A-2
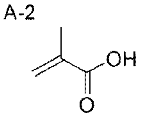
A-3
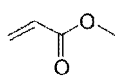
A-4
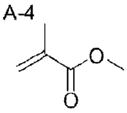
A-5
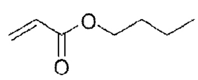
A-6
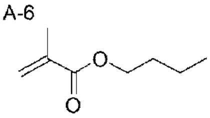

A-7
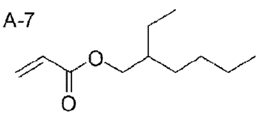
A-8
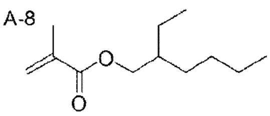
A-9
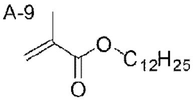
A-10
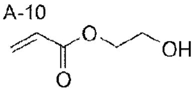

A-11
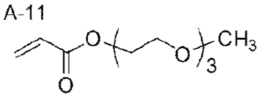
A-12
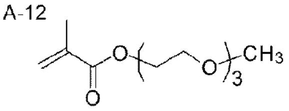
A-13
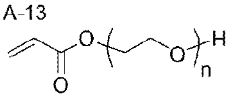
A-14
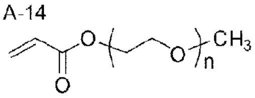

A-15
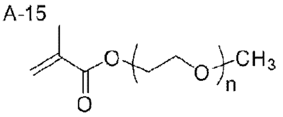
A-16
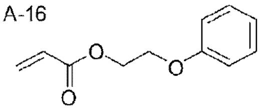
A-17
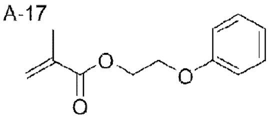
A-18
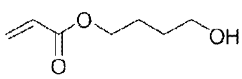

A-19
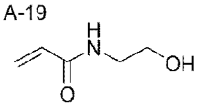
A-20
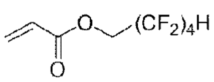
A-21
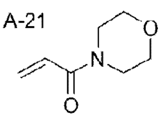
A-22
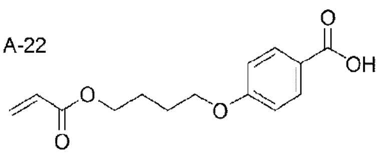

A-23
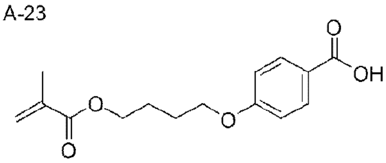
A-24
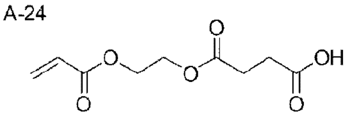
A-25
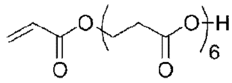

A-26
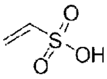
A-27
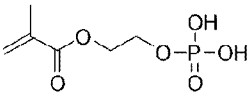
A-28
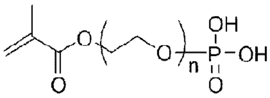
A-29
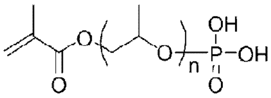

A-30
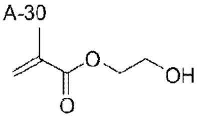
A-31
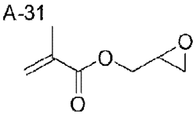
A-32
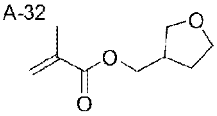
A-33
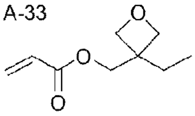
A-34
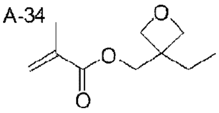

A-35
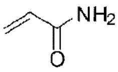
A-36
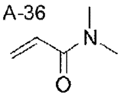
A-37
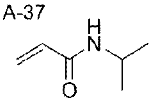
A-38
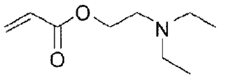
A-39
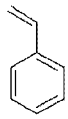
A-40
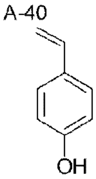
A-41
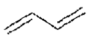

A-42
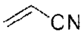
A-43
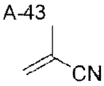
A-44
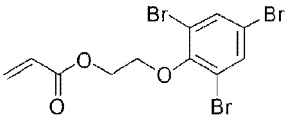
A-45
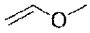
A-46
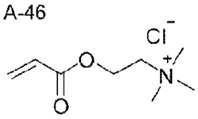
A-47
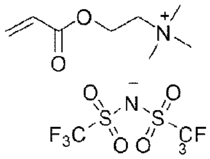

A-48
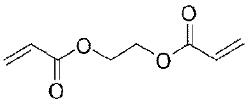
A-49
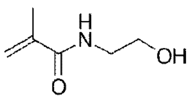
A-50
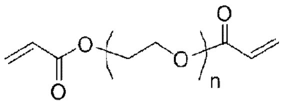

A-51
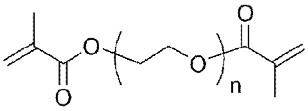
A-52
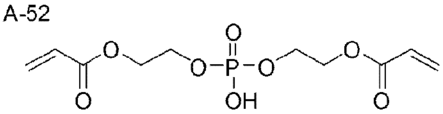

A-53
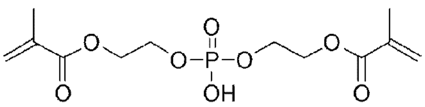
A-54
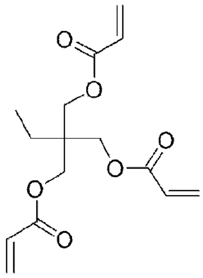
A-55
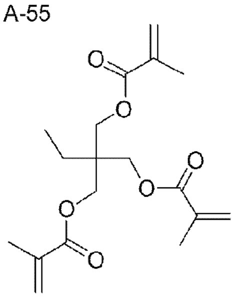

A-56 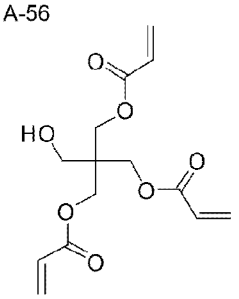 A-57 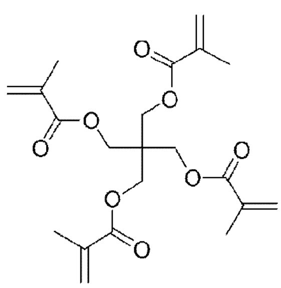 A-58 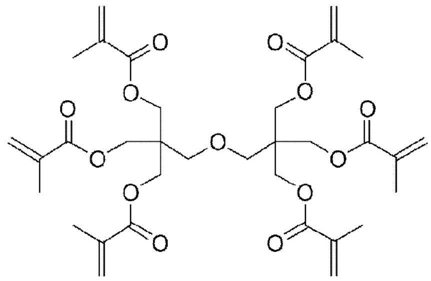

A-59 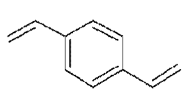 A-60 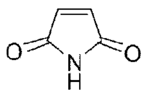 A-61 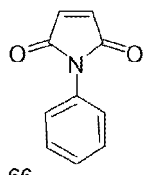 A-62 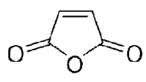 A-63 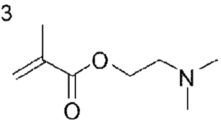

A-64 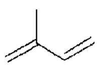 A-65 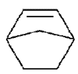 A-66 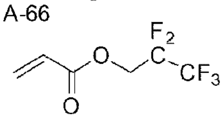 A-67 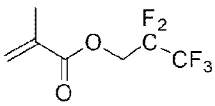 A-68 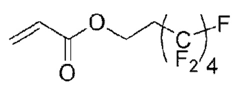

A-69 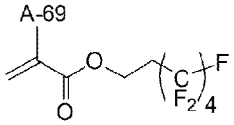 A-70 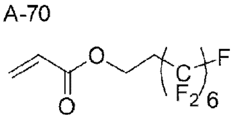 A-71 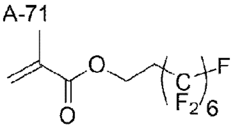 A-72 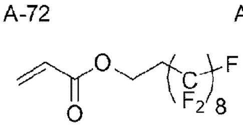 A-73 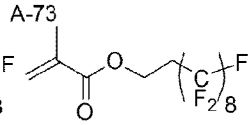

A-74 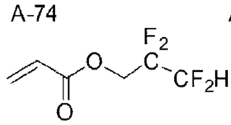 A-75 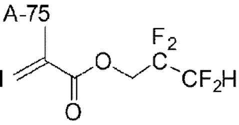 A-76 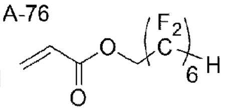 A-77 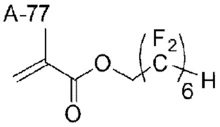 A-78 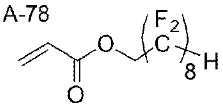

A-79 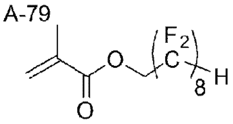 A-80 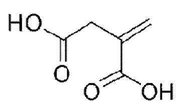 A-81 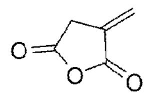

The polymer (B) is preferably a monomer represented by General Formula (4). In the following chemical structural formulae, () indicates a repeating unit.

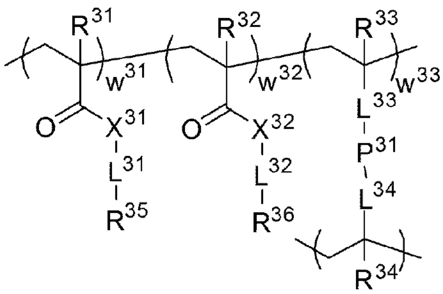

General Formula (4)

In the formulae, $R^{31}$ to $R^{34}$ are identical to $R^1$ in General Formula (2), and preferred ranges thereof are also identical thereto. $X^{31}$ and $X^{32}$ are identical to X in Formula (a-11), and preferred ranges thereof are also identical thereto.

$L^{31}$ and $L^{32}$ are identical to $L^{21}$ in Formula (a-11), and preferred ranges thereof are also identical thereto. $L^{33}$ and $L^{34}$ are respectively identical to $L^1$ and $L^2$ in General Formula (2), and preferred ranges thereof are also identical thereto. $P^{31}$ is identical to $P^1$ in General Formula (2), and a preferred range thereof is also identical thereto. $R^{35}$ and $R^{36}$ are identical to $R^{22}$ in Formula (a-11), and preferred ranges thereof are also identical thereto. $w^{31}$ to $w^{33}$ represent the mass ratios of individual repeating units, $w^{33}$ is identical to the proportion of the constituent component derived from the macromonomer in the polymer (B) described above, and a preferred range thereof is also identical thereto. $w^{31} + w^{32} + w^{33}$ = 100% by mass. Each of the constituent components may be a single constituent component or a combination of two or more constituent components as long as the description of General Formula (4) is satisfied.

The polymer (B) may be used singly or two or more monomers may be used in combination. In addition, the polymer (B) can be synthesized using an ordinary method using the above-described monomers.

(Substituent T)

Examples of the substituent T include the following substituents:
an alkyl group (preferably having 1 to 20 carbon atoms), an alkenyl group (preferably having 2 to 20 carbon atoms), an alkynyl group (preferably having 2 to 20 carbon atoms), a cycloalkyl group (preferably having 3 to 20 carbon atoms. Here, in the case of being referred to as an alkyl group in the present invention, generally, a cycloalkyl group is also referred to), an aryl group (preferably having 6 to 26 carbon atoms), an aralkyl group (preferably having 7 to 23 carbon atoms), a heterocyclic group (preferably a heterocyclic group having 2 to 20 carbon atoms, preferably a 5- or 6-membered heterocyclic group having at least one selected from an oxygen atom, a sulfur atom, or a nitrogen atom), an alkoxy group (preferably having 1 to 20 carbon atoms), an aryloxy group (preferably having 6 to 26 carbon atoms. Here, in the case of being referred to as an alkoxy group in the present invention, generally, an aryloyl group is also referred to), an alkoxycarbonyl group (preferably having 2 to 20 carbon atoms), an aryloxycarbonyl group (preferably having 6 to 26 carbon atoms), an amino group (preferably an amino group, alkylamino group, or arylamino group having 0 to 20 carbon atoms), an ammonio group (preferably an ammonio group, alkylammonio group, or arylammonio group having 0 to 20 carbon atoms), a sulfamoyl group (preferably having 0 to 20 carbon atoms), an acyl group (preferably having 1 to 20 carbon atoms), an aryloyl group (preferably having 7 to 23 carbon atoms. Here, in the case of being referred to as an acyl group in the present invention, generally, an aryloyl group is also referred to), an acyloxy group (preferably having 1 to 20 carbon atoms), an aryloyloxy group (preferably having 7 to 23 carbon atoms. Here, in the case of being referred to as an acyloxy group in the present invention, generally, an aryloyloxy group is also referred to), a carbamoyl group (preferably having 1 to 20 carbon atoms), an acylamino group (preferably having 1 to 20 carbon atoms), an alkylsulfanyl group (preferably having 1 to 20 carbon atoms), an arylsulfanyl group (preferably having 6 to 26 carbon atoms), an alkylsulfonyl group (preferably having 1 to 20 carbon atoms), an arylsulfonyl group (preferably having 6 to 22 carbon atoms), an alkylsilyl group (preferably having 1 to 20 carbon atoms), an arylsilyl group (preferably having 6 to 42 carbon atoms), an alkoxysilyl group (preferably having 1 to 20 carbon atoms), an aryloxysilyl group (preferably having 6 to 42 carbon atoms), a phosphoyl group (preferably a phosphoryl group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a (meth)acryloyl group, a (meth)acryloyloxy group, a (meth)acryloylimino group (a (meth)acrylamide group), a hydroxy group, a sulfanyl group, a carboxy group, a phosphate group, a phosphate group, a sulfonic acid group, a cyano group, and a halogen atom (for example, a fluorine atom, a chlorine atom, a bromine atom, or an iodine atom). $R^P$ is a hydrogen atom, a hydroxy group, or a substituent (preferably a group selected from the substituent T).

In addition, in the respective groups exemplified as the substituent T, the substituent T may be further substituted.

In a case in which a compound, a substituent, a linking group, and the like have an alkyl group, an alkylene group, an alkenyl group, an alkenylene group, an alkynyl group, an alkynylene group, and the like, the compound, the substituent, the linking group, and the like may have a cyclic shape or a chain shape, may be linear or branched, and may be substituted or unsubstituted as described above.

((C) Dispersion medium)

The solid electrolyte composition of the embodiment of the present invention contains the dispersion medium (C). Hereinafter, the "dispersion medium (C)" will also be simply referred to as the dispersion medium in some cases.

The dispersion medium (C) needs to be one dispersing the respective components included in the solid electrolyte composition of the embodiment of the present invention, and examples thereof include a variety of organic solvents. Specific examples of the dispersion medium include dispersion media described below.

Examples of an alcohol compound solvent include methyl alcohol, ethyl alcohol, 1-propyl alcohol, 2-propyl alcohol, 2-butanol, ethylene glycol, propylene glycol, 1,6-hexanediol, cyclohexane diol, 1,3-butanediol, and 1,4-butanediol.

As an ether compound solvent, alkylene glycols (triethylene glycol and the like), alkylene glycol monoalkyl ethers (ethylene glycol monomethyl ether and the like), alkylene glycol dialkyl ethers (ethylene glycol dimethyl ether and the like), dialkyl ethers (diisopropyl ether, dibutyl ether, and the like), and cyclic ethers (tetrahydrofuran, dioxanes (including each of 1,2-, 1,3-, and 1,4- isomers, and the like)).

Examples of an amide compound solvent include N,N-dimethylformamide, N-methyl-2-pyrrolidone, 2-pyrrolidinone, 1,3-dimethyl-2-imidazolidinone, 2-pyrrolidinone, ε-caprolactam, formamide, N-methylformamide, acetamide, N-methylacetamide, N,N-dimethylacetamide, N-methylpropanamide, hexamethylphosphoric triamide, and the like.

Examples of an amino compound solvent include triethylamine, diisopropylethylamine, tributylamine, and the like.

Examples of a ketone compound solvent include acetone, methyl ethyl ketone, methyl isobutyl ketone, cyclohexanone, and dibutyl ketone.

Examples of an aromatic compound solvent include benzene, toluene, and xylene.

Examples of an aliphatic compound solvent include hexane, heptane, octane, decane, cyclohexane, cyclooctane, and the like.

Examples of a nitrile compound solvent include acetonitrile, propionitrile, isobutyronitrile, and the like.

Examples of the ester compound solvent include ethyl acetate, butyl acetate, propyl acetate, butyl butyrate, butyl pentanoate, and the like.

As a non-aqueous dispersion medium, the aromatic compound solvent, the aliphatic compound solvent, and the like are exemplified.

In the present invention, among them, an ether compound solvent, a ketone compound solvent, an aliphatic compound solvent, and an ester compound solvent are preferred, and a ketone compound solvent and an aliphatic compound solvent are more preferred. In the present invention, it is preferable to use the sulfide-based inorganic solid electrolyte and, furthermore, select the above-described specific organic solvent. The selection of this combination enables the stable handling of the sulfide-based inorganic solid electrolyte, which is preferable. Particularly, a combination of the sulfide-based inorganic solid electrolyte and an aliphatic compound solvent is preferred.

The CLog P value of the dispersion medium (C) that is used in the present invention is preferably 1 or more, more preferably 2 or more, and particularly preferably 3 or more. The upper limit is not particularly limited, but is realistically 10 or less.

In the present invention, the CLog P value refers to a value of a common logarithm Log P of a partition coefficient P into 1-octanol and water obtained by computation. As a method or software used for the computation of the CLog P value, a well-known method and software can be used; however, unless particularly otherwise described, a value computed by drawing the structure using ChemDraw manufactured by PerkinElmer Co., Ltd. is used.

As such a dispersion medium, from the above-described dispersion media, toluene (CLog P = 2.5), hexane (CLog P = 3.9), heptane (CLog P = 4.4), octane (CLog P = 4.9), cyclohexane (CLog P = 3.4), cyclooctane (CLog P = 4.5), dibutyl ketone (CLog P = 3.0), dibutyl ether (CLog P = 3.0), butyl butyrate (CLog P = 2.8), tributylamine (CLog P = 4.8), and the like are exemplified. Among these, hexane, heptane, dibutyl ether, cyclohexane, cyclooctane, dibutyl ketone, and butyl butyrate are particularly preferred. In a case in which the CLog P value is set in the above-described range, the dispersion medium does not have any functional group or has a hydrophobic substituent, and it is possible to stably handle the sulfide-based inorganic solid electrolyte without decomposing the sulfide-based inorganic solid electrolyte.

The dispersion medium (C) may be a pure substance or a mixture of two or more dispersion media.

(Active material (D) capable of intercalating and deintercalating ions of metals belonging to Group I or II of the periodic table)

The solid electrolyte composition of the embodiment of the invention may also contain an active material (D)capable of intercalating and deintercalating ions of metal elements belonging to Group I or II of the periodic table. Hereinafter, the "active material (D) capable of intercalating and deintercalating ions of metals belonging to Group I or II of the periodic table" will also be simply referred to as "active material (D)" or active material.

As the active material, a positive electrode active material and a negative electrode active material are exemplified, and a metal oxide (preferably a transition metal oxide) that is a positive electrode active material, a metal oxide that is a negative electrode active material, or metal capable of forming an alloy with lithium such as Sn, Si, Al, or In is preferred.

In the present invention, the solid electrolyte composition containing the active material (a positive electrode active material or a negative electrode active material) will be referred to as a composition for an electrode (a composition for a positive electrode or a composition for a negative electrode).

- Positive electrode active material -

A positive electrode active material that the solid electrolyte composition of the embodiment of the invention may contain is preferably a positive electrode active material capable of reversibly intercalating and deintercalating lithium ions. The above-described material is not particularly limited as long as the material has the above-described characteristics and may be transition metal oxides, organic substances, elements capable of being complexed with Li such as sulfur, complexes of sulfur and metal, or the like.

Among these, as the positive electrode active material, transition metal oxides are preferably used, and transition metal oxides having a transition metal element $M^a$ (one or more elements selected from Co, Ni, Fe, Mn, Cu, and V) are more preferred. In addition, an element $M^b$ (an element of Group I (Ia) of the metal periodic table other than lithium, an element of Group II (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element $M^a$. The positive electrode active material is more preferably synthesized by mixing the element into the transition metal oxide so that the molar ratio of $Li/M^a$ reaches 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), lithium-containing transition metal silicate compounds (ME), and the like.

Specific examples of the transition metal oxides having a bedded salt-type structure (MA) include $LiCoO_2$ (lithium cobalt oxide [LCO]), $LiNi_2O_2$ (lithium nickelate) $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compounds (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and monoclinic nasicon-type vanadium phosphate salt such as $Li_3V_2(PO_4)_3$ (lithium vanadium phosphate).

Examples of the lithium-containing transition metal halogenated phosphoric acid compounds (MD) include iron fluorophosphates such as $Li_2FePO_4F$, manganese fluorophosphates such as $Li_2MnPO_4F$, cobalt fluorophosphates such as $Li_2CoPO_4F$.

Examples of the lithium-containing transition metal silicate compounds (ME) include $Li_2FeSiO_4$, $Li_2MnSiO_4$, $Li_2CoSiO_4$, and the like.

In the present invention, the transition metal oxides having a bedded salt-type structure (MA) is preferred, and LCO or NMC is more preferred.

The shape of the positive electrode active material is not particularly limited, but is preferably a particle shape. The volume-average particle diameter (circle-equivalent average particle diameter) of positive electrode active material particles is not particularly limited. For example, the volume-average particle diameter can be set to 0.1 to 50 $\mu$m. In order to provide a predetermined particle diameter to the positive electrode active material, an ordinary crusher or classifier may be used. Positive electrode active materials obtained using a firing method may be used after being washed with water, an acidic aqueous solution, an alkaline aqueous solution, or an organic solvent. The volume-average particle diameter (circle-equivalent average particle diameter) of positive electrode active material particles can be measured using a laser diffraction/scattering-type particle size distribution measurement instrument LA-920 (trade name, manufactured by Horiba Ltd.).

The positive electrode active material may be used singly or two or more positive electrode active materials may be used in combination.

In the case of forming a positive electrode active material layer, the mass (mg) of the positive electrode active material per unit area ($cm^2$) of the positive electrode active material layer (weight per unit area) is not particularly limited and can be appropriately determined depending on the set battery capacity.

The content of the positive electrode active material in the solid electrolyte composition is not particularly limited, but is preferably 10% to 95% by mass, more preferably 30% to 90% by mass, still more preferably 50% to 85% by mass, and particularly preferably 55% to 80% by mass with respect to a solid content of 100% by mass.

- Negative electrode active material -

A positive electrode active material that the solid electrolyte composition of the embodiment of the invention may contain is preferably a negative electrode active material capable of reversibly intercalating and deintercalating lithium ions. The above-described material is not particularly limited as long as the material has the above-described

characteristics, and examples thereof include carbonaceous materials, metal oxides such as tin oxide, silicon oxide, metal complex oxides, a lithium single body, lithium alloys such as lithium aluminum alloys, metals capable of forming alloys with lithium such as Sn, Si, Al, and In and the like. Among these, carbonaceous materials or a lithium single body is preferred. In addition, the metal complex oxides are preferably capable of absorbing and deintercalating lithium. The materials are not particularly limited, but preferably contain at least one of titanium or lithium as constituent components from the viewpoint of high-current density charging and discharging characteristics.

The carbonaceous material that is used as the negative electrode active material is a material substantially consisting of carbon. Examples thereof include petroleum pitch, carbon black such as acetylene black (AB), graphite (natural graphite, artificial graphite such as highly oriented pyrolytic graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, glassy carbon fibers, and active carbon fibers, mesophase microspheres, graphite whisker, flat graphite, and the like.

The metal oxides and the metal complex oxides being applied as the negative electrode active material are particularly preferably amorphous oxides, and furthermore, chalcogenides which are reaction products between a metal element and an element belonging to Group XVI of the periodic table are also preferably used. The amorphous oxides mentioned herein refer to oxides having a broad scattering band having a peak of a $2\theta$ value in a range of 20° to 40° in an X-ray diffraction method in which $CuK\alpha$ rays are used and may have crystalline diffraction lines.

In a compound group consisting of the amorphous oxides and the chalcogenides, amorphous oxides of semimetal elements and chalcogenides are more preferred, and elements belonging to Groups XIII (IIIB) to XV (VB) of the periodic table, oxides consisting of one element or a combination of two or more elements of Al, Ga, Si, Sn, Ge, Pb, Sb, and Bi, and chalcogenides are particularly preferred. Specific examples of preferred amorphous oxides and chalcogenides include $Ga_2O_3$, SiO, GeO, SnO, $SnO_2$, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Bi_2O_4$, $SnSiO_3$, GeS, SnS, $SnS_2$, PbS, $PbS_2$, $Sb_2S_3$, $Sb_2S_5$, and $SnSiS_3$. In addition, these amorphous oxides may be complex oxides with lithium oxide, for example, $Li_2SnO_2$.

The negative electrode active material preferably contains a titanium atom. More specifically, $Li_4Ti_5O_{12}$ (lithium titanium oxide [LTO]) is preferred since the volume fluctuation during the absorption and deintercalation of lithium ions is small, and thus the high-speed charging and discharging characteristics are excellent, and the deterioration of electrodes is suppressed, whereby it becomes possible to improve the service lives of lithium ion secondary batteries.

In the present invention, a Si-based negative electrode is also preferably applied. Generally, a Si negative electrode is capable of absorbing a larger number of Li ions than a carbon negative electrode (graphite, acetylene black, or the like). That is, the amount of Li ions absorbed per unit mass increases. Therefore, it is possible to increase the battery capacity. As a result, there is an advantage that the battery driving duration can be extended.

The shape of the negative electrode active material is not particularly limited, but is preferably a particle shape. The average particle diameter of the negative electrode active material is preferably 0.1 to 60 $\mu$m. In order to provide a predetermined particle diameter, an ordinary crusher or classifier is used. For example, a mortar, a ball mill, a sand mill, an oscillatory ball mill, a satellite ball mill, a planetary ball mill, a revolving airflow-type jet mill, a sieve, or the like is preferably used. During crushing, it is also possible to carry out wet-type crushing in which water or an organic solvent such as methanol is made to coexist as necessary. In order to provide a desired particle diameter, classification is preferably carried out. The classification method is not particularly limited, and it is possible to use a sieve, a wind power classifier, or the like depending on the necessity. Both of dry-type classification and wet-type classification can be carried out. The average particle diameter of negative electrode active material particles can be measured using the same method as the method for measuring the volume-average particle diameter of the positive electrode active material.

The chemical formulae of the compounds obtained using a firing method can be computed using an inductively coupled plasma (ICP) emission spectroscopic analysis method as a measurement method from the mass difference of powder before and after firing as a convenient method.

The negative electrode active material may be used singly or two or more negative electrode active materials may be used in combination.

In the case of forming a negative electrode active material layer, the mass (mg) of the negative electrode active material per unit area ($cm^2$) in the negative electrode active material layer (weight per unit area) is not particularly limited and can be appropriately determined depending on the set battery capacity.

The content of the negative electrode active material in the solid electrolyte composition is not particularly limited, but is preferably 10% to 80% by mass and more preferably 20% to 80% by mass with respect to a solid content of 100% by mass.

The surfaces of the positive electrode active material and the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based

oxides, lithium niobate-based compounds, and the like, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and the like.

In addition, a surface treatment may be carried out on the surfaces of electrodes including the positive electrode active material or the negative electrode active material using sulfur, phosphorous, or the like.

Furthermore, the particle surfaces of the positive electrode active material or the negative electrode active material may be treated with an active light ray or an active gas (plasma or the like) before or after the coating of the surfaces.

(Dispersant)

The solid electrolyte composition of the embodiment of the invention may also contain a dispersant. The addition of the dispersant enables the suppression of the agglomeration of the electrode active material and the inorganic solid electrolyte even in at least one case of a case in which the content of any of the electrode active material and the inorganic solid electrolyte is high or a case in which the particle diameters of the electrode active material and the inorganic solid electrolyte are small and the surface area increases and the formation of a uniform active material layer and a uniform solid electrolyte layer. As the dispersant, a dispersant that is generally used for an all-solid state secondary battery can be appropriately selected and used. Generally, a compound intended for at least one of particle adsorption and steric repulsion or electrostatic repulsion is preferably used.

(Lithium Salt)

The solid electrolyte composition of the embodiment of the invention may also contain a lithium salt.

The lithium salt is not particularly limited, and, for example, the lithium salt described in Paragraphs 0082 to 0085 of JP2015-088486A is preferred.

The content of the lithium salt is preferably 0 parts by mass or more and more preferably 5 parts by mass or more with respect to 100 parts by mass of the inorganic solid electrolyte. The upper limit is preferably 50 parts by mass or less and more preferably 20 parts by mass or less.

<Ionic liquid>

The solid electrolyte composition of the embodiment of the invention may also contain an ionic liquid in order to further improve the ion conductivity of individual layers constituting a solid electrolyte-containing sheet or an all-solid state secondary battery. The ionic liquid is not particularly limited, but is preferably an ionic liquid dissolving the above-described lithium salt from the viewpoint of effectively improving the ion conductivity. Examples thereof include compounds made of a combination of a cation and an anion described below.

(i) Cation

As the cation, an imidazolium cation, a pyridinium cation, a piperidinium cation, a pyrrolidinium cation, a morpholinium cation, a phosphonium cation, a quaternary ammonium cation, and the like are exemplified. Here, these cations have a substituent described below.

As the cation, these cations may be used singly or two or more cations can be used in combination.

A quaternary ammonium cation, a piperidinium cation, or a pyrrolidinium cation is preferred.

As the substituent that the cation has, an alkyl group (preferably having 1 to 8 carbon atoms and more preferably having 1 to 4 carbon atoms), a hydroxyalkyl group (preferably having 1 to 3 carbon atoms), an alkyloxyalkyl group (an alkyloxyalkyl group having 2 to 8 carbon atoms is preferred, and an alkyloxyalkyl group having 2 to 4 carbon atoms is more preferred), an ether group, an allyl group, an aminoalkyl group (an aminoalkyl group having 1 to 8 carbon atoms is preferred, and an aminoalkyl group having 1 to 4 carbon atoms is more preferred), and an aryl group (an aryl group having 6 to 12 carbon atoms is preferred, and an aryl group having 6 to 8 carbon atoms is more preferred) are exemplified. The substituent may form a cyclic structure in a form of containing a cation site. The substituent may further have a substituent described in the section of the dispersion medium. Meanwhile, the ether group can be used in combination with other substituents. As such a substituent, an alkyloxy group, an aryloxy group, and the like are exemplified.

(ii) Anion

As the anion, a chloride ion, a bromide ion, an iodide ion, a boron tetrafluoride ion, a nitric acid ion, a dicyanamide ion, an acetic acid ion, an iron tetrachloride ion, a bis(trifluoromethanesulfonyl)imide ion, a bis(fluorosulfonyl)imide ion,

a bis(perfluorobutylmethanesulfonyl)imide ion, an allylsulfonate ion, a hexafluorophosphate ion, a trifluoromethanesulfonate ion, and the like are exemplified.

As the anion, these anions may be used singly or two or more anions may also be used in combination.

A boron tetrafluoride ion, a bis(trifluoromethanesulfonyl)imide ion, a bis(fluorosulfonyl)imide ion or a hexafluorophosphate ion, a dicyanamide ion, and an allylsulfonate ion are preferred, and a bis(trifluoromethanesulfonyl)imide ion or a bis(fluorosulfonyl)imide ion and an allylsulfonate ion are more preferred.

As the ionic liquid, for example, 1-allyl-3-ethylimidazolium bromide, 1-ethyl-3-methylimidazolium bromide, 1-(2-hydroxyethyl)-3-methylimidazolium bromide, 1-(2-methoxyethyl)-3-methylimidazolium bromide, 1-octyl-3-methylimidazolium chloride, N,N-diethyl-N-methyl-N-(2-methoxyethyl)ammonium tetrafluoroborate, 1-ethyl-3-methylimidazolium bis(trifluoromethanesulfonyl)imide, 1-ethyl-3-methylimidazolium bis(fluorosulfonyl)imide, 1-ethyl-3-methylimidazolium dicyanamide, 1-butyl-1-methylpyrrolidinium bis(trifluoromethanesulfonyl)imide, trimethylbutylammonium bis(trifluoromethanesulfonyl)imide, N,N-diethyl-N-methyl-N-(2-methoxyethyl) ammonium bis(trifluoromethanesulfonyl)imide (DEME), N-propyl-N-methylpyrrolidinium bis(trifluoromethanesulfonyl)imide (PMP), N-(2-methoxyethyl)-N-methylpyrrolidinium tetrafluoroboride, 1-butyl-1-methylpyrrolidinium bis(fluorosulfonyl)imide, (2-acryloylethyl) trimethylammonium bis(trifluoromethanesulfonyl)imide, 1-ethyl-1-methylpyrrolidinium allyl sulfonate, 1-ethyl-3-methylimidazolium allylsulfonate, and trihexyltetradecylphosphonium chloride are exemplified.

The content of the ionic liquid is preferably 0 parts by mass or more, more preferably 1 part by mass or more, and most preferably 2 parts by mass or more with respect to 100 parts by mass of the inorganic solid electrolyte. The upper limit is preferably 50 parts by mass or less, more preferably 20 parts by mass or less, and particularly preferably 10 parts by mass or less.

The mass ratio between the lithium salt (C) and the ionic liquid (the lithium salt (C):the ionic liquid) is preferably 1:20 to 20:1, more preferably 1:10 to 10:1, and most preferably 1:7 to 2:1.

(Conductive auxiliary agent)

The solid electrolyte composition of the embodiment of the invention may also contain a conductive auxiliary agent. The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used. In addition, these conductive auxiliary agents may be used singly or two or more conductive auxiliary agents may be used.

(Preparation of solid electrolyte composition)

The solid electrolyte composition of the embodiment of the invention can be prepared by dispersing the inorganic solid electrolyte (A) and the polymer (B) in the presence of the dispersion medium (C) to produce a slurry.

The slurry can be produced by mixing the inorganic solid electrolyte (A), the polymer (B), and the dispersion medium (C) using a variety of mixers. The mixing device is not particularly limited, and examples thereof include a ball mill, a beads mill, a planetary mixer, a blade mixer, a roll mill, a kneader, and a disc mill. The mixing conditions are not particularly limited; however, in the case of using a ball mill, the inorganic solid electrolyte and the dispersion medium are preferably mixed together at 150 to 700 rpm (rotation per minute) for one hour to 24 hours.

In the case of preparing a solid electrolyte composition containing components such as the active material (D) and a dispersant, the components may be added and mixed simultaneously with a dispersion step of the inorganic solid electrolyte (A) and the polymer (B) or may be separately added and mixed.

[Sheet for all-solid state secondary battery]

The solid electrolyte-containing sheet of the embodiment of the invention can be preferably used in all-solid state secondary batteries and is modified in a variety of aspects depending on the uses. Examples thereof include a sheet that is preferably used in a solid electrolyte layer (also referred to as a solid electrolyte sheet for an all-solid state secondary battery), a sheet that is preferably used in an electrode or a laminate of an electrode and a solid electrolyte layer (an electrode sheet for an all-solid state secondary battery), and the like. In the present invention, a variety of sheets described above will be collectively referred to as a sheet for an all-solid state secondary battery in some cases.

The sheet for an all-solid state secondary battery is a sheet having a solid electrolyte layer or an active material layer (electrode layer). This sheet for an all-solid state secondary battery may further have other layers as long as the

sheet has the solid electrolyte layer or the active material layer, but a sheet containing an active material is classified into an electrode sheet for an all-solid state secondary battery described below. Examples of other layers include a protective layer, a collector, a coating layer (a collector, a solid electrolyte layer, or an active material layer), and the like.

Examples of the solid electrolyte sheet for an all-solid state secondary battery include a sheet having a solid electrolyte layer and a protective layer on a base material in this order and a sheet made of a solid electrolyte layer or an active material layer (electrode layer) (a sheet not having a base material).

The base material is not particularly limited as long as the base material is capable of supporting the solid electrolyte layer or the active material layer, and examples thereof include sheet bodies (plate-like bodies) of materials, organic materials, inorganic materials, and the like described in the section of the collector described below. Examples of the organic materials include a variety of polymers and the like, and specific examples thereof include polyethylene terephthalate, polypropylene, polyethylene, cellulose, and the like. Examples of the inorganic materials include glass, ceramic, and the like.

The layer thickness of the solid electrolyte layer in the sheet for an all-solid state secondary battery is identical to the layer thickness of the solid electrolyte layer described in the section of an all-solid state secondary battery of the embodiment of the invention.

This sheet is obtained by forming a film of the solid electrolyte composition of the embodiment of the invention (by means of application and drying) on the base material (possibly, through other layers) and forming a solid electrolyte layer on the base material. The base material may be a sheet made of a solid electrolyte layer peeled off from the solid electrolyte layer.

Here, the solid electrolyte composition of the embodiment of the invention can be prepared using the above-described method.

An electrode sheet for an all-solid state secondary battery of the embodiment of the invention (also simply referred to as "the electrode sheet") is an electrode sheet for forming an active material layer in an all-solid state secondary battery of the embodiment of the invention and having an active material layer on a metal foil as a collector. This electrode sheet is generally a sheet having a collector and an active material layer, and an aspect of having a collector, an active material layer, and a solid electrolyte layer in this order and an aspect of having a collector, an active material layer, a solid electrolyte layer, and an active material layer in this order are also considered as the electrode sheet.

The layer thicknesses of the respective layers constituting the electrode sheet are identical to the layer thicknesses of individual layers described in the section of an all-solid state secondary battery of the embodiment of the invention.

The electrode sheet is obtained by forming a film of the solid electrolyte composition of the embodiment of the invention which contains the active material (by means of application and drying) on the metal foil and forming an active material layer on the metal foil. A method for preparing the solid electrolyte composition containing the active material is the same as the method for preparing the solid electrolyte composition except for the fact that the active material is used.

[All-solid state secondary battery]

An all-solid state secondary battery of the embodiment of the invention has a positive electrode, a negative electrode facing the positive electrode, and a solid electrolyte layer between the positive electrode and the negative electrode. The positive electrode has a positive electrode active material layer on a positive electrode collector. The negative electrode has a negative electrode active material layer on a negative electrode collector.

At least one layer of the negative electrode active material layer, the positive electrode active material layer, or the solid electrolyte layer is formed using the solid electrolyte composition of the embodiment of the invention.

In at least one layer of the active material layer or the solid electrolyte layer formed of the solid electrolyte composition, the kinds of the components being contained and content ratios thereof are preferably the same as the solid content of the solid electrolyte composition.

Hereinafter, an all-solid state secondary battery of a preferred embodiment of the present invention will be described with reference to Fig. 1, but the present invention is not limited thereto.

Fig. 1 is a cross-sectional view schematically illustrating the all-solid state secondary battery (lithium ion secondary battery) according to the preferred embodiment of the present invention. In the case of being seen from the negative electrode side, an all-solid state secondary battery 10 of the present embodiment has a negative electrode collector 1, a negative electrode active material layer 2, a solid electrolyte layer 3, a positive electrode active material layer 4, and a positive electrode collector 5 in this order. The respective layers are in contact with one another and have a laminated structure. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated on the negative electrode side return to the positive electrode, and electrons are supplied to an operation portion 6. In an example illustrated in the drawing, an electric bulb is employed as the operation portion 6 and is lit by discharging. The solid electrolyte composition of the embodiment of

the invention can be preferably used as a material used to shape the negative electrode active material layer, the positive electrode active material layer, and the solid electrolyte layer. In addition, the solid electrolyte-containing sheet of the embodiment of the invention is preferred as the negative electrode active material layer, the positive electrode active material layer, and the solid electrolyte layer.

In the present specification, the positive electrode active material layer (hereinafter, also referred to as the positive electrode layer) and the negative electrode active material layer (hereinafter, also referred to as the negative electrode layer) will be collectively referred to as the electrode layer or the active material layer in some cases.

Meanwhile, in a case in which an all-solid state secondary battery having the layer constitution shown in Fig. 1 is put into a 2032-type coin case, the all-solid state secondary battery having the layer constitution shown in Fig. 1 will be referred to as the electrode sheet for an all-solid state secondary battery, and a battery produced by putting this electrode sheet for an all-solid state secondary battery into the 2032-type coin case will be referred to as the all-solid state secondary battery, thereby referring to both batteries distinctively in some cases.

The thicknesses of the positive electrode active material layer 4, the solid electrolyte layer 3, and the negative electrode active material layer 2 are not particularly limited. Meanwhile, in a case in which the dimensions of ordinary batteries are taken into account, the thicknesses are preferably 10 to 1,000 μm and more preferably 20 μm or more and less than 500 μm. In the all-solid state secondary battery of the embodiment of the invention, the thickness of at least one layer of the positive electrode active material layer 4, the solid electrolyte layer 3, or the negative electrode active material layer 2 is still more preferably 50 μm or more and less than 500 μm.

[Positive electrode active material layer, solid electrolyte layer, and negative electrode active material layer]

In the all-solid state secondary battery 10, at least one of the positive electrode active material layer, the solid electrolyte layer, or the negative electrode active material layer is formed using the solid electrolyte composition of the embodiment of the invention.

That is, in a case in which the solid electrolyte layer 3 is formed using the solid electrolyte composition of the embodiment of the invention, the solid electrolyte layer 3 includes the inorganic solid electrolyte (A) and the polymer (B). The solid electrolyte layer, generally, does not include any positive electrode active material and any negative electrode active material. In the solid electrolyte layer 3, the polymer (B) is considered to be present between the solid particles of the inorganic solid electrolyte (A) and the active material included in an adjacent active material layer. Therefore, the interface resistance between the solid particles is decreased, and the binding property becomes strong.

In a case in which at least one of the positive electrode active material layer 4 or the negative electrode active material layer 2 is formed using the solid electrolyte composition of the embodiment of the present invention, the positive electrode active material layer 4 and the negative electrode active material layer 2 each include a positive electrode active material or a negative electrode active material and further include the inorganic solid electrolyte (A) and the polymer (B). In a case in which the active material layers contain the inorganic solid electrolyte (A), it is possible to improve the ion conductivity. In the active material layer, the polymer (B) is considered to be present between the solid particles or the like. Therefore, the interface resistance between the solid particles is decreased, and the binding property becomes strong.

The kinds of the inorganic solid electrolyte (A) and the polymer (B) that the positive electrode active material layer 4, the solid electrolyte layer 3, and the negative electrode active material layer 2 contain may be identical to or different from each other.

In the present invention, any layer of the negative electrode active material layer, the positive electrode active material layer, or the solid electrolyte layer in the all-solid state secondary battery is produced using the solid electrolyte composition containing the polymer (B) and the solid particle of the inorganic solid electrolyte or the like. Therefore, it is possible to improve the binding property between the solid particles, and, consequently, a favorable cycle characteristic of the all-solid state secondary battery can also be realized.

[Collector (Metal Foil)]

The positive electrode collector 5 and the negative electrode collector 1 are preferably an electron conductor.

In the present invention, there are cases in which any or both of the positive electrode collector and the negative electrode collector will be simply referred to as the collector.

As a material forming the positive electrode collector, aluminum, an aluminum alloy, stainless steel, nickel, titanium, or the like, and furthermore, a material obtained by treating the surface of aluminum or stainless steel with carbon, nickel, titanium, or silver (a material forming a thin film) is preferred, and, among these, aluminum and an aluminum alloy are more preferred.

As a material forming the negative electrode collector, aluminum, copper, a copper alloy, stainless steel, nickel, titanium, or the like, and furthermore, a material obtained by treating the surface of aluminum, copper, a copper alloy,

or stainless steel with carbon, nickel, titanium, or silver is preferred, and aluminum, copper, a copper alloy, or stainless steel is more preferred.

Regarding the shape of the collector, generally, collectors having a film sheet-like shape are used, but it is also possible to use net-shaped collectors, punched collectors, compacts of lath bodies, porous bodies, foaming bodies, or fiber groups, and the like.

The thickness of the collector is not particularly limited, but is preferably 1 to 500 $\mu$m. In addition, the surface of the collector is preferably provided with protrusions and recesses by means of a surface treatment.

In the present invention, a functional layer, member, or the like may be appropriately interposed or disposed between the respective layers of the negative electrode collector, the negative electrode active material layer, the solid electrolyte layer, the positive electrode active material layer, and the positive electrode collector or on the outside thereof. In addition, the respective layers may be constituted of a single layer or multiple layers.

[Chassis]

It is possible to produce the basic structure of the all-solid state secondary battery by disposing the respective layers described above. Depending on the use, the basic structure may be directly used as an all-solid state secondary battery, but the basic structure may be used after being enclosed in an appropriate chassis in order to have a dry battery form. The chassis may be a metallic chassis or a resin (plastic) chassis. In a case in which a metallic chassis is used, examples thereof include an aluminum alloy chassis and a stainless-steel chassis. The metallic chassis is preferably classified into a positive electrode-side chassis and a negative electrode-side chassis and electrically connected to the positive electrode collector and the negative electrode collector respectively. The positive electrode-side chassis and the negative electrode-side chassis are preferably integrated by being joined together through a gasket for short circuit prevention.

[Manufacturing of solid electrolyte-containing sheet]

The solid electrolyte-containing sheet of the embodiment of the invention is obtained, for example, by forming a film of the solid electrolyte composition of the embodiment of the invention on a base material (possibly, through a different layer) (application and drying) and forming a solid electrolyte layer or an active material layer (application drying layer) on the base material.

With the above-described aspect, it is possible to produce a sheet for an all-solid state secondary battery that is a sheet having a base material and an applied dried layer. Here, the applied dried layer refers to a layer formed by applying the solid electrolyte composition of the embodiment of the present invention and drying the dispersion medium (that is, a layer formed using the solid electrolyte composition of the embodiment of the present invention and removing the dispersion solvent from the solid electrolyte composition of the embodiment of the present invention).

Additionally, regarding steps such as application, it is possible to use a method described in the following section of the manufacturing of an all-solid state secondary battery.

Meanwhile, the solid electrolyte-containing sheet may also contain a dispersion medium in each layer as long as the battery performance is not affected. Specifically, the content of the dispersion medium in each layer may be 1 ppm or more and 10,000 ppm or less of the total mass.

[All-solid state secondary battery and manufacturing of electrode sheet for all-solid state secondary battery]

The all-solid state secondary battery and the electrode sheet for an all-solid state secondary battery can be manufactured using an ordinary method. Specifically, the all-solid state secondary battery and the electrode sheet for an all-solid state secondary battery can be manufactured by forming the respective layers described above using the solid electrolyte composition of the embodiment of the invention or the like. Hereinafter, the manufacturing of the all-solid state secondary battery and the electrode sheet for an all-solid state secondary battery will be described in detail.

The all-solid state secondary battery of the embodiment of the invention can be manufactured using a method including (through) a step of applying the solid electrolyte composition of the embodiment of the invention onto a metal foil which serves as a collector and forming a coated film (film manufacturing).

For example, a solid electrolyte composition containing a positive electrode active material is applied as a material for a positive electrode (a composition for a positive electrode) onto a metal foil which is a positive electrode collector so as to form a positive electrode active material layer, thereby producing a positive electrode sheet for an all-solid state secondary battery. Next, a solid electrolyte composition for forming a solid electrolyte layer is applied onto the positive electrode active material layer so as to form a solid electrolyte layer. Furthermore, a solid electrolyte composition containing a negative electrode active material is applied as a material for a negative electrode (a composition for a negative electrode) onto the solid electrolyte layer so as to form a negative electrode active material layer. A

negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can be produced by enclosing the all-solid state secondary battery in a chassis as necessary.

In addition, it is also possible to manufacture an all-solid state secondary battery by carrying out the methods for forming the respective layers in a reverse order so as to form a negative electrode active material layer, a solid electrolyte layer, and a positive electrode active material layer on a negative electrode collector and overlaying a positive electrode collector thereon.

As another method, the following method can be exemplified. That is, a positive electrode sheet for an all-solid state secondary battery is produced as described above. In addition, a solid electrolyte composition containing a negative electrode active material is applied as a material for a negative electrode (a composition for a negative electrode) onto a metal foil which is a negative electrode collector so as to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer so that the solid electrolyte layer and the active material layer come into contact with each other. An all-solid state secondary battery can be manufactured as described above.

As still another method, the following method can be exemplified. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, a solid electrolyte composition is applied onto a base material, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated together so as to sandwich the solid electrolyte layer that has been peeled off from the base material. An all-solid state secondary battery can be manufactured as described above.

An all-solid state secondary battery can be manufactured by combining the above-described forming methods. For example, a positive electrode sheet for an all-solid state secondary battery, a negative electrode sheet for an all-solid state secondary battery, and a solid electrolyte sheet for an all-solid state secondary battery are produced respectively. Next, a solid electrolyte layer peeled off from a base material is laminated on the negative electrode sheet for an all-solid state secondary battery and is then attached to the positive electrode sheet for an all-solid state secondary battery, whereby an all-solid state secondary battery can be manufactured. In this method, it is also possible to laminate the solid electrolyte layer on the positive electrode sheet for an all-solid state secondary battery and attach the solid electrolyte layer to the negative electrode sheet for an all-solid state secondary battery.

(Formation of individual layers (Film formation))

The method for applying the solid electrolyte composition is not particularly limited and can be appropriately selected. Examples thereof include coating (preferably wet-type coating), spray coating, spin coating, dip coating, slit coating, stripe coating, and bar coating.

At this time, the solid electrolyte composition may be dried after being applied or may be dried after being applied to multiple layers. The drying temperature is not particularly limited. The lower limit is preferably 30°C or higher, more preferably 60°C or higher, and still more preferably 80°C or higher. The upper limit is preferably 300°C or lower, more preferably 250°C or lower, and still more preferably 200°C or lower. In a case in which the compositions are heated in the above-described temperature range, it is possible to remove the dispersion medium and form a solid state. In addition, the temperature is not excessively increased, and the respective members of the all-solid state secondary battery are not impaired, which is preferable. Therefore, in the all-solid state secondary battery, excellent total performance is exhibited, and it is possible to obtain a favorable binding property.

After the production of the applied solid electrolyte composition or the all-solid state secondary battery, the respective layers or the all-solid state secondary battery is preferably pressurized. In addition, the respective layers are also preferably pressurized in a state of being laminated together. Examples of the pressurization method include a hydraulic cylinder pressing machine and the like. The welding pressure is not particularly limited, but is, generally, preferably in a range of 50 to 1,500 MPa.

In addition, the applied solid electrolyte composition may be heated at the same time as pressurization. The heating temperature is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which the applied solvent or dispersion medium has been

dried in advance or in a state in which the solvent or the dispersion medium remains.

Meanwhile, the respective compositions may be applied at the same time, and the application, the drying, and the pressing may be carried out simultaneously or sequentially. The respective compositions may be applied to separate base materials and then laminated by means of transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure can be changed depending on the area or film thickness of the portion under pressure. In addition, it is also possible to change the same portion with a pressure that varies stepwise.

A pressing surface may be flat or roughened.

(Initialization)

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

[Usages of all-solid state secondary battery]

The all-solid state secondary battery of the embodiment of the invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, memory cards, and the like. Additionally, examples of consumer usages include vehicles (electric cars and the like), electric vehicles, motors, lighting equipment, toys, game devices, road conditioners, watches, strobes, cameras, medical devices (pacemakers, hearing aids, shoulder massage devices, and the like), and the like. Furthermore, the all-solid state secondary battery can be used for a variety of military usages and universe usages. In addition, the all-solid state secondary battery can also be combined with solar batteries.

According to the preferred embodiment of the present invention, individual application forms as described below are derived.

[1] All-solid state secondary batteries in which all layers of a positive electrode active material layer, a solid electrolyte layer, and a negative electrode active material layer are layers made of the solid electrolyte composition of the embodiment of the present invention.
[2] Methods for manufacturing an all-solid state secondary battery in which a solid electrolyte layer is formed by applying a slurry in which two kinds of the polymers (B) are dispersed in a wet manner and manufacturing a film.
[3] Solid electrolyte compositions containing an active material for producing the all-solid state secondary battery.
[4] Electrode sheets for a battery obtained by applying the solid electrolyte composition onto a metal foil to form a film.
[5] Methods for manufacturing an electrode sheet for a battery in which the solid electrolyte composition is applied onto a metal foil, thereby manufacturing a film.

As described in the preferred embodiments [2] and [5], preferred methods for manufacturing the all-solid state secondary battery and the electrode sheet for a battery are all wet-type processes. Therefore, even in a region in at least one layer of the positive electrode active material layer or the negative electrode active material layer in which the content of the inorganic solid electrolyte is as low as 10% by mass or less, the adhesiveness between the active material and the inorganic solid electrolyte, an efficient ion conduction path can be maintained, and it is possible to manufacture an all-solid state secondary battery having a high energy density (Wh/kg) and a high output density (W/kg) per battery

mass.

All-solid state secondary batteries refer to secondary batteries having a positive electrode, a negative electrode, and an electrolyte, all of which are constituted of solid. In other words, all-solid state secondary batteries are differentiated from electrolytic solution-type secondary batteries in which a carbonate-based solvent is used as an electrolyte. Among these, the present invention is assumed to be an inorganic all-solid state secondary battery. All-solid state secondary batteries are classified into organic (polymer) all-solid state secondary batteries in which a polymer compound such as polyethylene oxide is used as an electrolyte and inorganic all-solid state secondary batteries in which the Li-P-S-based glass, LLT, LLZ, or the like is used. Meanwhile, the application of organic compounds to inorganic all-solid state secondary batteries is not inhibited, and organic compounds can also be applied as binders or additives of positive electrode active materials, negative electrode active materials, and inorganic solid electrolytes.

Inorganic solid electrolytes are differentiated from electrolytes in which the above-described polymer compound is used as an ion conductive medium (polymer electrolyte), and inorganic compounds serve as ion conductive media. Specific examples thereof include the Li-P-S glass, LLT, and LLZ. Inorganic solid electrolytes do not deintercalate positive ions (Li ions) and exhibit an ion transportation function. In contrast, there are cases in which materials serving as an ion supply source which is added to electrolytic solutions or solid electrolyte layers and deintercalatings positive ions (Li ions) are referred to as electrolytes. However, in the case of being differentiated from electrolytes as the ion transportation materials, the materials are referred to as "electrolyte salts" or "supporting electrolytes". Examples of the electrolyte salts include LiTFSI.

In the present invention, "compositions" refer to mixtures obtained by uniformly mixing two or more components. Here, compositions may partially include agglomeration or uneven distribution as long as the compositions substantially maintain uniformity and exhibit desired effects.

## Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "room temperature" refers to 25°C. In chemical structural formulae shown below, () indicates a repeating structure, and [] indicates a repeating unit.

### - Synthesis example of macromonomer -

#### (Synthesis of macromonomer MM-1)

Tetrahydrofuran (THF) (250 parts by mass) and both-terminal hydroxy group-modified hydrogenated polyisoprene (EPOL2500 (trade name), manufactured by Idemitsu Kosan Co., Ltd., mass-average molecular weight: 2,500) were added to a 1 L three-neck flask equipped with a reflux cooling pipe and a gas introduction coke and dissolved. Methacrylic acid chloride (manufactured by Wako Pure Chemical Industries, Ltd.) (14 parts by mass), triethylamine (manufactured by Wako Pure Chemical Industries, Ltd.) (20 parts by mass), 2,2,6,6-tetramethylpiperidine-1-oxyl (manufactured by Tokyo Chemical Industry Co., Ltd.) (0.05 parts by mass) were added to the obtained solution and dissolved. A liquid prepared in a separate container (a solution of pyridine (11 parts by mass) and THF (130 parts by mass)) was added dropwise for one hour to the obtained solution under stirring and then stirred at 40°C for four hours. The obtained mixture was cooled to room temperature and then precipitated by adding methanol thereto, decantation was carried out, the precipitate was washed with methanol twice and then dissolved by adding heptane (60 parts by mass) thereto. The obtained solution was condensed by depressurization, thereby obtaining a solution of a macromonomer MM-1. The mass-average molecular weight was 3,000.

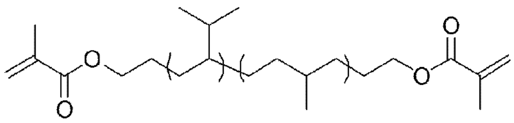

Macromonomer MM-1

#### (Synthesis of macromonomer MM-2)

A macromonomer MM-2 was synthesized in the same manner as the macromonomer MM-1 except for the fact that both-terminal hydroxy group-modified hydrogenated polyisoprene was changed to both-terminal hydroxy group-modified polybutadiene (NISSO-PBG-3000 (trade name), manufactured by Nippon Soda Co., Ltd., mass-average molecular weight: 6,000). The mass-average molecular weight of the macromonomer MM-2 was 6,200.

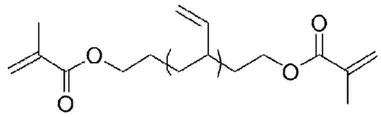

Macromonomer MM-2

(Synthesis of macromonomer MM-3)

A macromonomer MM-3 was synthesized in the same manner as the macromonomer MM-1 except for the fact that methacrylic acid chloride was changed to 2-isocyanatoethyl acrylate (manufactured by Wako Pure Chemical Industries, Ltd.) and triethylamine was not added. The mass-average molecular weight of the macromonomer MM-3 was 3,000.

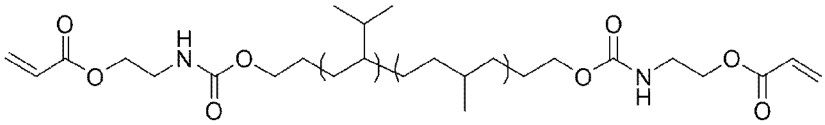

Macromonomer MM-3

(Synthesis of macromonomer MM-4)

A macromonomer MM-4 was synthesized in the same manner as the macromonomer MM-1 except for the fact that both-terminal hydroxy group-modified polyisoprene was changed to both-terminal hydroxy group-modified polydimethylsiloxane (KF-6003 (trade name), manufactured by Shin-Etsu Chemical Co., Ltd., mass-average molecular weight: 10,000). The mass-average molecular weight of the macromonomer MM-4 was 10,500.

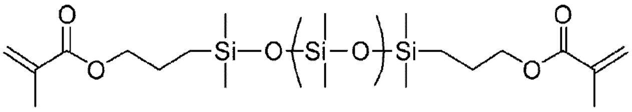

Macromonomer MM-4

(Synthesis of macromonomer MM-5)

A macromonomer MM-5 was synthesized in the same manner as the macromonomer MM-1 except for the fact that both-terminal hydroxy group-modified polyisoprene was changed to both-terminal hydroxy group-modified hydrogenated polybutadiene (NISSO-PBGI-1000 (trade name), manufactured by Nippon Soda Co., Ltd., mass-average molecular weight: 2,000). The mass-average molecular weight of the macromonomer MM-5 was 2,200.

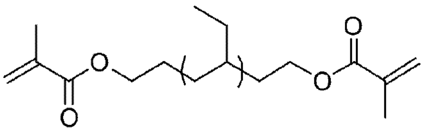

Macromonomer MM-5

- Synthesis example of polymer (B) -

<Synthesis of polymer B-1 (preparation of polymer B-1 dispersion liquid)>

Heptane (200 parts by mass) was added to a 1 L three-neck flask equipped with a reflux cooling pipe and a gas introduction coke, nitrogen gas was introduced thereto for 10 minutes at a flow rate of 200 mL/min, and then heptane was heated to 80°C. A liquid prepared in a separate container (a liquid obtained by mixing 2-hydroxyethyl acrylate (M1 in Table 1)) (manufactured by Wako Pure Chemical Industries, Ltd.) (140 parts by mass), acrylic acid (M2 in Table 1)) (manufactured by Wako Pure Chemical Industries, Ltd.) (20 parts by mass), the macromonomer MM-1 (MM in Table 1)) (40 parts by mass (solid content amount), and a polymerization initiator V-601 (trade name, manufactured by Wako Pure Chemical Industries, Ltd.) (2.0 parts by mass) was added dropwise for two hours and then stirred at 80°C for two hours. After that, V-601 (1.0 g) was added to the obtained mixture and further stirred at 90°C for two hours. The obtained solution was diluted with heptane, thereby obtaining a dispersion liquid of a polymer B-1 that was a polymer particle.

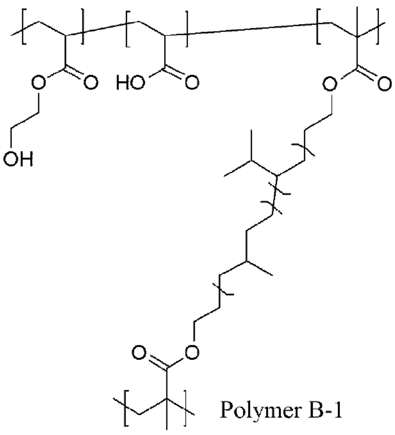

Polymer B-1

Polymers B-2 to B-13 and BC-1 to BC-4 were synthesized in the same manner as the polymer B-1 except for the fact that the composition was changed as shown in Table 1. The mass-average molecular weights of the polymers B-1 to B-13 and BC-1 to BC-4 are shown in Table A.

[Table A]

| No. | Mass average molecular weight |
|---|---|
| B-1 | 95,000 |
| B-2 | 92,000 |
| B-3 | 86,000 |
| B-4 | 78,000 |
| B-5 | 84,000 |
| B-6 | 90,000 |
| B-7 | 92,000 |
| B-8 | 87,000 |
| B-9 | 68,000 |
| B-10 | 74,000 |
| B-11 | 96,000 |
| B-12 | 83,000 |
| B-13 | 79,000 |
| BC-1 | 73,000 |
| BC-2 | 83,000 |
| BC-3 | 69,000 |
| BC-4 | 85,000 |

[Table 1]

| No. | M1 | | | M2 | | | M3 | | | MM | | | | | Dispersion medium | | Shape | Average particle diameter |
|---|---|---|---|---|---|---|---|---|---|---|---|---|---|---|---|---|---|---|
| | | Content (%) | SP value | | Content (%) | SP value | | Content (%) | SP value | | Content (%) | SP value | Linking group | Functional group | Kind | CLogP value | | |
| B-1 | HEA | 70 | 25 | AA | 10 | 23.1 | - | - | - | MM-1 | 20 | 17.3 | Polyalkylene group | Methacryloyl group | THF | 0.5 | Particle | 352nm |
| B-2 | HEA | 70 | 25 | AA | 10 | 23.1 | - | - | - | MM-1 | 20 | 17.3 | Polyalkylene group | Methacryloyl group | Heptane | 4.4 | Particle | 209nm |
| B-3 | HEA | 60 | 25 | AA | 10 | 23.1 | - | - | - | MM-1 | 30 | 17.3 | Polyalkylene group | Methacryloyl group | Heptane | 4.4 | Particle | 182nm |
| B-4 | HEA | 60 | 25 | AA | 10 | 23.1 | - | - | - | MM-2 | 30 | 18.3 | Polyalkenylene group | Methacryloyl group | Heptane | 4.4 | Particle | 180nm |
| B-5 | HEA | 70 | 25 | AA | 10 | 23.1 | - | - | - | MM-3 | 20 | 17.4 | Polyalkylene group | Acryloyl group | Heptane | 4.4 | Particle | 213nm |
| B-6 | HEA | 70 | 25 | AA | 10 | 23.1 | - | - | - | MM-4 | 20 | 17.7 | Polyalkylene group | Methacryloyl group | Heptane | 4.4 | Particle | 280nm |
| B-7 | HEA | 70 | 25 | AA | 10 | 23.1 | - | - | - | MM-5 | 20 | 17.2 | Polyalkylene group | Methacryloyl group | Heptane | 4.4 | Particle | 205nm |
| B-8 | PEGAA | 70 | 20.6 | AA | 10 | 23.1 | - | - | - | MM-1 | 20 | 17.3 | Polyalkylene group | Methacryloyl group | Heptane | 4.4 | Particle | 253nm |
| B-9 | MA | 70 | 22.3 | AA | 10 | 23.1 | - | - | - | MM-1 | 20 | 17.3 | Polyalkylene group | Methacryloyl group | Heptane | 4.4 | Particle | 235nm |
| B-10 | HEA | 70 | 25 | AEHS | 10 | 23.1 | - | - | - | MM-1 | 20 | 17.3 | Polyalkylene group | Methacryloyl group | Heptane | 4.4 | Particle | 195nm |
| B-11 | BA | 70 | 20.4 | AA | 10 | 23.1 | - | - | - | MM-1 | 20 | 17.3 | Polyalkylene group | Methacryloyl group | Heptane | 4.4 | Particle | 182nm |
| B-12 | HEA | 77 | 25 | AA | 12 | 23.1 | - | - | - | MM-1 | 11 | 17.3 | Polyalkylene group | Methacryloyl group | Heptane | 4.4 | Particle | 530nm |
| B-13 | HEA | 54 | 25 | AA | 6 | 23.1 | - | - | - | MM-1 | 40 | 17.3 | Polyalkylene group | Methacryloyl group | Heptane | 4.4 | Particle | 121nm |

(continued)

| No. | M1 | | | M2 | | | M3 | | | MM | | | | | Dispersion medium | | Shape | Average particle diameter |
|---|---|---|---|---|---|---|---|---|---|---|---|---|---|---|---|---|---|---|
| | | Content (%) | SP value | | Content (%) | SP value | | Content (%) | SP value | | Content (%) | SP value | Linking group | Functional group | Kind | CLogP value | | |
| BC-1 | MMA | 27 | 22.3 | St | 20 | 20.5 | NP-PEGAA | 53 | 20 | - | - | - | - | - | Decalin | 4.8 | Particle | 122nm |
| BC-2 | BA | 60 | 20.4 | - | - | - | - | - | - | AS-6 | 40 | 19.4 | Polyarylene group | Methacryloyl group | Xylene | 3.1 | Liquid | - |
| BC-3 | BA | 70 | 20.4 | AA | 10 | 23.1 | - | - | - | PEGDA | 20 | 20.7 | Polyalkyleneoxy group | Acryloyl group | Heptane | 4.4 | Prccipitate | - |
| BC-4 | MA | 60 | 22.3 | - | - | - | - | - | - | AS-6 | 40 | 19.4 | Polyarylene group | Methacryloyl group | Heptane | 4.4 | Particle | 512nm |

<Notes of table>
HEA: 2-Hydoryethyl acrylate (manufactured by Wako Pure Chemical Industries, Ltd.), the above-described exemplary compound A-10
AA: Acrylic acid (manufactured by Wako Pure Chemical Industries, Ltd.), the above-described exemplary compound A-1
MMA: Methyl methacrylate (manufactured by Wako Pure Chemical Industries, Ltd.), the above-described exemplary compound A-4
St: Styrene (manufactured by Wako Pure Chemical Industries, Ltd.), the above-described exemplary compound A-39
PEGAA: Polyethylene glycol methyl ether acrylate (Mn-2,000, manufactured by Wako Pure Chemical Industries, Ltd.), the above-described exemplary compound A-14
NP-PEGAA: Nonylphenoxypolyethylene glycol acrylate (trade name: FA-314A, manufactured by Hitachi Chemical Co., Ltd.)
BA: Butyl acrylate (manufactured by Wako Pure Chemical Industries, Ltd.), the above-described exemplary compound A-5
AS-6: Macromonomer AS-6 (manufactured by Toagosei Co., Ltd.)
MA: Methyl acrylate (manufactured by Wako Pure Chemical Industries, Ltd.), the above-described exemplary compound A-3
PEGDA: Polyethylene glycol diacrylate (Mn = 2,000, manufactured by Sigma-Aldrich), the above-described exemplary compound A-50
AEHS: Mono(2-acryloyloxyethyl) succinate, the above-described exemplary compound A-24
The unit of the SP value is $MPa^{1/2}$.
"-" indicates that the composition is not contained.

<Synthesis of sulfide-based inorganic solid electrolyte>

As a sulfide-based inorganic solid electrolyte, Li-P-S-based glass was synthesized with reference to a non-patent document of T. Ohtomo, A. Hayashi, M. Tatsumisago, Y. Tsuchida, S. HamGa, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a globe box under an argon atmosphere (dew point: -70°C), lithium sulfide ($Li_2S$, manufactured by Aldrich-Sigma, Co. LLC. Purity: >99.98%) (2.42 g) and diphosphorus pentasulfide ($P_2S_5$, manufactured by Aldrich-Sigma, Co. LLC. Purity: >99%) (3.90 g) were respectively weighed, and injected into an agate mortar. The molar ratio between $Li_2S$ and $P_2S_5$ was set to 75:25 ($Li_2S$:$P_2S_5$). $Li_2S$ and $P_2S_5$ were mixed together on the agate mortar using an agate muddler for five minutes.

Sixty six grams of zirconia beads having a diameter of 5 mm were injected into a 45 mL zirconia container (manufactured by Fritsch Japan Co., Ltd.), the total amount of the mixture was injected thereinto, and the container was sealed in an argon atmosphere. The container was set in a planetary ball mill P-7 (trade name) manufactured by Fritsch Japan Co., Ltd., mechanical milling was carried out at 25°C and a rotation speed of 510 rpm for 20 hours, thereby obtaining yellow powder (6.20 g) of a sulfide-based inorganic solid electrolyte (Li-P-S-based glass, LPS). The volume-average particle diameter was 15 μm.

<Preparatiodn of solid electrolyte composition S-1>

One hundred eighty zirconia beads having a diameter of 5 mm were injected into a 45 mL zirconia container (manufactured by Fritsch Japan Co., Ltd.), and LPS synthesized above (4.85 g), the polymer B-1 (0.15 g, mass of solid component), and THF (16.0 g) were injected thereinto. After that, the container was set in a planetary ball mill P-7 (trade name) manufactured by Fritsch Japan Co., Ltd., and the components were continuously mixed at a temperature of 25°C and a rotation speed of 300 rpm for two hours, thereby obtaining a solid electrolyte composition S-1.

Solid electrolyte compositions S-2 to S-13 and BS-1 to BS-4 were prepared in the same manner as the solid electrolyte composition S-1 except for the fact that a composition shown in Table 2 was employed.

<Evaluation of dispersibility>

The solid electrolyte composition was added to a 10 mmϕ and 15 cm-high glass test tube up to a height of 10 cm and left to stand at 25°C for two hours, and then the height of a separated supernatant was measured, thereby visually evaluating dispersibility (dispersion stability) using the following evaluation standards. "4" or higher is the pass of the present test. The results are shown in Table 2.

- Evaluation standards -

8: Height of supernatant/height of total amount<0.1
7: 0.1≤height of supernatant/height of total amount<0.2
6: 0.2≤height of supernatant/height of total amount<0.3
5: 0.3≤height of supernatant/height of total amount<0.4
4: 0.4<height of supernatant/height of total amount<0.5
3: 0.5≤height of supernatant/height of total amount<0.7
2: 0.7≤height of supernatant/height of total amount<0.9
1: 0.9≤height of supernatant/height of total amount

[The total amount: the total amount of the solid electrolyte composition that was a slurry, the supernatant: a supernatant liquid generated after the sedimentation of a solid component of the solid electrolyte composition]

(Production example of solid electrolyte sheet for all-solid state secondary battery)

The solid electrolyte composition obtained above was applied onto a 20 mm-thick aluminum foil using an applicator (trade name: SA-201 Baker type applicator, manufactured by Tester Sangyo Co., Ltd.) and heated at 80°C for two hours, thereby drying the solid electrolyte composition. After that, the solid electrolyte composition dried at a temperature of 120°C and a pressure of 600 MPa for 10 seconds was heated and pressurized using a heat press, thereby obtaining individual solid electrolyte sheets for an all-solid state secondary battery Nos. 101 to 113 and c11 to

cl3. The film thicknesses of all of the solid electrolyte layers were 50 μm.

The following test was carried out on the produced solid electrolyte sheets for an all-solid state secondary battery, and the results are shown in Table 2.

<Evaluation of binding property>

The solid electrolyte sheets for an all-solid state secondary battery were wound around rods having different diameters so that the aluminum foil came into contact with the rod, the presence or absence of a chip, a crack, and a fissure in the solid electrolyte layer and the presence or absence of the peeling of the solid electrolyte layer from the aluminum foil (collector) were confirmed, the minimum diameter of the solid electrolyte sheet wound without any abnormality was confirmed and evaluated using the following evaluation standards. "5" or higher is the pass of the present test. The results are shown in Table 2.

-Evaluation standards-

8: Minimum diameter of non-peeled solid electrolyte sheet<2 mm
7: 2 mm≤minimum diameter of non-peeled solid electrolyte sheet<4 mm
6: 4 mm≤minimum diameter of non-peeled solid electrolyte sheet<6 mm
5: 6 mm≤minimum diameter of non-peeled solid electrolyte sheet<10 mm
4: 10 mm≤minimum diameter of non-peeled solid electrolyte sheet<14 mm
3: 14 mm≤minimum diameter of non-peeled solid electrolyte sheet<20 mm
2: 20 mm≤minimum diameter of non-peeled solid electrolyte sheet<32 mm
1: 32 mm≤minimum diameter of non-peeled solid electrolyte sheet

<Measurement of ion conductivity>

A disc-shaped piece having a diameter of 14.5 mm was cut out from the solid electrolyte sheet for an all-solid state secondary battery obtained above, and this solid electrolyte sheet for an all-solid state secondary battery 12 was put into a 2032-type coin case 11 illustrated in Fig. 2. Specifically, an aluminum foil cut out to a disc shape having a diameter of 15 mm (not illustrated in Fig. 2) was brought into contact with the solid electrolyte layer, a spacer and a washer (both are not illustrated in Fig. 2) were combined thereinto, and the laminate was put into a stainless steel 2032-type coin case 11. The 2032-type coin case 11 was swaged, thereby producing a holding device for measuring the ion conductivity 13.

The ion conductivity was measured using the holding device for measuring the ion conductivity obtained above. Specifically, the alternating-current impedance was measured in a constant-temperature tank (30°C) using a 1255B FREQUENCY RESPONSE ANALYZER (trade name) manufactured by SOLARTRON Analytical at a voltage magnitude of 5 mV and a frequency of 1 MHz to 1 Hz. The resistance of the specimen in the film thickness direction was obtained in the above-described manner and obtained by computation using Expression (1). "5" or higher is the pass of the present test. The results are shown in Table 2.

$$\text{Ion conductivity (mS/cm)} = 1000 \times \text{specimen film thickness (cm)}/(\text{resistance } (\Omega) \times \text{specimen area } (\text{cm}^2))$$

-Evaluation standards-

8: 0.5 mS/cm≤ion conductivity
7: 0.4 mS/cm≤ion conductivity<0.5 mS/cm
6: 0.3 mS/cm≤ion conductivity<0.4 mS/cm
5: 0.2 mS/cm≤ion conductivity<0.3 mS/cm
4: 0.1 mS/cm≤ion conductivity<0.2 mS/cm
3: 0.05 mS/cm<ion conductivity<0.1 mS/cm
2: 0.01 mS/cm≤ion conductivity<0.05 mS/cm

1: Ion conductivity<0.01 mS/cm

[Table 2]

| Sheet No. | Composition No. | (A) | Content | (B) | Content | (C) | CLog P value | Dispersibility | Binding Property | Ion conductivity |
|---|---|---|---|---|---|---|---|---|---|---|
| 101 | S-1 | LPS | 97% | B-1 | 3% | THF | 0.5 | 5 | 8 | 5 |
| 102 | S-2 | LPS | 97% | B-2 | 3% | Heptane | 4.4 | 7 | 7 | 8 |
| 103 | S-3 | LPS | 97% | B-3 | 3% | Heptane | 4.4 | 8 | 7 | 7 |
| 104 | S-4 | LPS | 97% | B-4 | 3% | Heptane | 4.4 | 7 | 6 | 6 |
| 105 | S-5 | LPS | 97% | B-5 | 3% | Heptane | 4.4 | 7 | 7 | 8 |
| 106 | S-6 | LPS | 97% | B-6 | 3% | Heptane | 4.4 | 6 | 6 | 7 |
| 107 | S-7 | LPS | 97% | B-7 | 3% | Heptane | 4.4 | 7 | 7 | 8 |
| 108 | S-8 | LPS | 97% | B-8 | 3% | Heptane | 4.4 | 6 | 6 | 8 |
| 109 | S-9 | LPS | 97% | B-9 | 3% | Heptane | 4.4 | 7 | 7 | 7 |
| 110 | S-10 | LPS | 97% | B-10 | 3% | Heptane | 4.4 | 7 | 8 | 8 |
| 111 | S-11 | LPS | 97% | B-11 | 3% | Heptane | 4.4 | 6 | 6 | 6 |
| 112 | S-12 | LPS | 97% | B-12 | 3% | Heptane | 4.4 | 4 | 5 | 5 |
| 113 | S-13 | LPS | 97% | B-13 | 3% | Heptane | 4.4 | 6 | 5 | 5 |
| c11 | BS-1 | LPS | 97% | BC-1 | 3% | Decalin | 4.8 | 1 | 3 | 5 |
| c12 | BS-2 | LPS | 97% | BC-2 | 3% | Xylene | 3.1 | 2 | 2 | 3 |
| c13 | BS-3 | LPS | 97% | BC-3 | 3% | Heptane | 4.4 | 2 | 4 | 4 |
| c14 | BS-4 | LPS | 97% | BC-4 | 3% | Heptane | 4.4 | 2 | 2 | 4 |

As is clear from Table 2, Nos. c11 to c14 in which the polymer (B) defined in the present invention was not used failed in at least the dispersibility and the binding property.
In contrast, Nos. 101 to 113 passed in all of the dispersibility, the binding property, and the ion conductivity.

<Notes of table>

LPS: Sulfide-based inorganic solid electrolyte synthesized above
Sheet No.: No. of a solid electrolyte sheet for an all-solid state secondary battery. For example, the solid electrolyte sheet for an all-solid state secondary battery 101 indicates the sheet produced using the solid electrolyte composition S-1.
Composition No.: No. of solid electrolyte composition

(A): Inorganic solid electrolyte (A)
(B): Polymer (B)
(C): Dispersion medium (C)

<Preparation of composition for positive electrode>

One hundred eighty zirconia beads having a diameter of 5 mm were injected into a 45 mL zirconia container (manufactured by Fritsch Japan Co., Ltd.), and LPS (2.7 g), the polymer B-1 dispersion liquid in an amount in which the polymer B-1 (solid component mass) reached 0.3 g, and THF (22 g) were injected thereinto. After that, the container was set in a planetary ball mill P-7 (trade name) manufactured by Fritsch Japan Co., Ltd., and the components were stirred at 25°C and a rotation speed of 300 rpm for two hours. After that, NMC (manufactured by Nippon Chemical Industrial Co., Ltd.) (7.0 g) was injected thereinto as an active material, similarly, the container was set in the planetary ball mill P-7, and the components were continuously mixed together at 25°C and a rotation speed of 100 rpm for 15 minutes, thereby obtaining a composition for a positive electrode U-1.
Compositions for a positive electrode U-2 to U-13 and V-1 to V-4 shown in Table 3 were prepared in the same manner as the composition for a positive electrode U-1.

[Table 3]

| No. | Positive electrode active material | | Solid electrolyte | | Polymer (B) | | Dispersion medium (C) |
|---|---|---|---|---|---|---|---|
| | | % | | % | | % | |
| U-1 | NMC | 70 | LPS | 27 | B-1 | 3 | THF |
| U-2 | NMC | 70 | LPS | 27 | B-2 | 3 | Heptane |
| U-3 | NMC | 70 | LPS | 27 | B-3 | 3 | Heptane |
| U-4 | NMC | 70 | LPS | 27 | B-4 | 3 | Heptane |
| U-5 | NMC | 70 | LPS | 27 | B-5 | 3 | Heptane |
| U-6 | NMC | 70 | LPS | 27 | B-6 | 3 | Heptane |
| U-7 | NMC | 70 | LPS | 27 | B-7 | 3 | Heptane |
| U-8 | NMC | 70 | LPS | 27 | B-8 | 3 | Heptane |
| U-9 | NMC | 70 | LPS | 27 | B-9 | 3 | Heptane |
| U-10 | NMC | 70 | LPS | 27 | B-10 | 3 | Heptane |
| U-11 | NMC | 70 | LPS | 27 | B-11 | 3 | Heptane |
| U-12 | NMC | 70 | LPS | 27 | B-12 | 3 | Heptane |
| U-13 | NMC | 70 | LPS | 27 | B-13 | 3 | Heptane |
| V-1 | NMC | 70 | LPS | 27 | BC-1 | 3 | Decalin |
| V-2 | NMC | 70 | LPS | 27 | BC-2 | 3 | Xylene |
| V-3 | NMC | 70 | LPS | 27 | BC-3 | 3 | Heptane |
| V-4 | NMC | 70 | LPS | 27 | BC-4 | 3 | Heptane |

All of the compositions for a positive electrode U-1 to U-13 passed the dispersibility test. In addition, positive electrode sheets for an all-solid state secondary battery (having a positive electrode active material layer, but not having a solid electrolyte layer) produced using the compositions for a positive electrode U-1 to U-13 all passed the binding property test.

<Production of positive electrode sheet for all-solid state secondary battery>

The composition for a positive electrode U-1 obtained above was applied onto a 20 μm-thick aluminum foil using a Baker-type applicator (trade name: SA-201, manufactured by Tester Sangyo Co., Ltd.), heated at 80°C for two hours, and the composition for a positive electrode was dried by being heated at 80°C for two hours. After that, the dried composition for a positive electrode U-1 was heated (at 80°C) and pressurized (at 600 MPa for one minute) using a heat press, thereby producing a positive electrode sheet for an all-solid state secondary battery having a positive electrode active material layer having a film thickness of 80 μm.

Next, the solid electrolyte composition S-1 was applied onto the obtained positive electrode active material layer using the Baker-type applicator, and the solid electrolyute composition was dried by being heated at 80°C for two hours. After that, the dried solid electrolyte composition S-1 was heated (at 80°C) and pressurized (at 600 MPa for 10 seconds) using the heat press, thereby producing a positive electrode sheet for an all-solid state secondary battery including a solid electrolyte layer having a film thickness of 30 μm.

<Production of all-solid state secondary batteries>

A disc-shaped piece having a diameter of 14.5 mm was cut out from the positive electrode sheet for an all-solid state secondary battery obtained above and put into a 2032-type stainless steel coin case 11 in which a spacer and a washer (not illustrated in Fig. 2) were combined together, and a lithium foil cut to 15 mmϕ was overlaid on the solid electrolyte layer. A stainless steel foil was further overlaid thereon, and then the 2032-type coin case 11 was swaged, thereby producing an all-solid state secondary battery 13 No. 201 illustrated in Fig. 2.

The all-solid state secondary battery manufactured in the above-described manner has a layer constitution illustrated in Fig. 1.

All-solid state secondary batteries Nos. 202 to 213 and c21 to c23 were produced in the same manner as the all-solid state secondary battery No. 201 except for the fact that the compositions for forming the positive electrode active material layer and the solid electrolyte layer were respectively changed to compositions in Table 4.

<Evaluation of discharge capacity maintenance rate (cycle characteristic)>

The discharge capacity maintenance rates of the all-solid state secondary batteries obtained above were measured using a charge and discharge evaluation device TOSCAT-3000 (trade name) manufactured by Toyo systems Development Co., Ltd. The coin battery was charged at a current density of 0.1 $mA/cm^2$ until the battery voltage reached 3.6 V. The coin battery was discharged at a current density of 0.1 $mA/cm^2$ until the battery voltage reached 2.5 V. Three cycles of charging and discharging were repeated under the above-described conditions, thereby carrying out initiation. The discharge capacity of the first cycle after initiation was regarded as 100%, and the number of cycles after which the discharge capacity maintenance rate reached 80% was evaluated using the following standards. An evaluation standard "4" or higher is pass. The results are shown in Table 4.

<Evaluation standards>

8: 500 cycles or more
7: 300 cycles or more and less than 500 cycles
6: 200 cycles or more and less than 300 cycles
5: 150 cycles or more and less than 200 cycles
4: 80 cycles or more and less than 150 cycles
3: 40 cycles or more and less than 80 cycles
2: 20 cycles or more and less than 40 cycles
1: Less than 20 cycles

<Evaluation of resistance>

The resistances of the all-solid state secondary batteries obtained above were evaluated using the charge and discharge evaluation device TOSCAT-3000 (trade name) manufactured by Toyo systems Development Co., Ltd. The coin battery was charged at a current density of 0.1 $mA/cm^2$ until the battery voltage reached 4.2 V. The coin battery was discharged at a current density of 0.2 mA/cm2 until the battery voltage reached 2.5 V. These charging and discharging were repeated, the battery voltage after discharging of 5 mAh/g (the quantity of electricity per gram of the mass of the active material) in the third cycle was read, and the resistance was evaluated. A high battery voltage indicates a low resistance. An evaluation standard "4" or higher is pass. The results are shown in Table 4.

<Evaluation standards>

8: 4.1 V or more

7: 4.0 V or more and less than 4.1 V

6: 3.9 V or more and less than 4.0 V

5: 3.7 V or more and less than 3.9 V

4: 3.5 V or more and less than 3.7 V

3: 3.2 V or more and less than 3.5 V

2: 2.5 V or more and less than 3.2 V

1: Charging and discharging are not possible

[Table 4]

| No. | Layer constitution | | Discharge capacity maintenance rate | Resistance | Note |
|---|---|---|---|---|---|
| | Positive electrode layer | Solid electrolyte layer | | | |
| 201 | U-1 | S-1 | 8 | 5 | This invention |
| 202 | U-2 | S-2 | 7 | 8 | This invention |
| 203 | U-3 | S-3 | 7 | 7 | This invention |
| 204 | U-4 | S-4 | 6 | 6 | This invention |
| 205 | U-5 | S-5 | 7 | 8 | This invention |
| 206 | U-6 | S-6 | 6 | 7 | This invention |
| 207 | U-7 | S-7 | 7 | 8 | This invention |
| 208 | U-8 | S-8 | 6 | 8 | This invention |
| 209 | U-9 | S-9 | 7 | 7 | This invention |
| 210 | U-10 | S-10 | 8 | 8 | This invention |
| 211 | U-11 | S-11 | 6 | 6 | This invention |
| 212 | U-12 | S-12 | 5 | 5 | This invention |
| 213 | U-13 | S-13 | 5 | 5 | This invention |
| c21 | V-1 | BS-1 | 2 | 3 | Comparative example |

(continued)

| No. | Layer constitution | | Discharge capacity maintenance rate | Resistance | Note |
|---|---|---|---|---|---|
| | Positive electrode layer | Solid electrolyte layer | | | |
| c22 | V-2 | BS-2 | 2 | 2 | Comparative example |
| c23 | V-3 | BS-3 | 3 | 3 | Comparative example |
| c24 | V-4 | BS-4 | 2 | 3 | Comparative example |

As is clear from Table 4, Nos. c21 to c24 in which the polymer (B) defined in the present invention was not used failed in all of the discharge capacity maintenance rate and the resistance.

In contrast, Nos. 201 to 213 passed in all of the discharge capacity maintenance rate and the resistance.

Solid electrolyte compositions, solid electrolyte sheets for an all-solid state secondary battery, composition for a positive electrode, positive electrode sheets for an all-solid state secondary battery, and all-solid state secondary batteries were produced in the same manner except for the fac that, in the solid electrolyte compositions for sheet Nos. 101 to 113 in Table 2, $Li_{0.33}La_{0.55}TiO_3$ was used instead of LPS, and the above-described tests were carried out. As a result, it was confirmed that excellent performance was exhibited.

The present invention has been described together with the embodiment; however, unless particularly specified, the present inventors do not intend to limit the present invention to any detailed portion of the description and consider that the present invention is supposed to be broadly interpreted within the concept and scope of the present invention described in the claims.

The present application claims priority on the basis of JP2017-177578 filed on September 15, 2017 in Japan, the content of which is incorporated herein by reference.

Explanation of References

1: negative electrode collector
2: negative electrode active material layer
3: solid electrolyte layer
4: positive electrode active material layer
5: positive electrode collector
6: operation portion
10: all-solid state secondary battery
11: 2032-type coin case
12: sheet for all-solid state secondary battery
13: holding device for measuring the ion conductivity or all-solid state secondary battery

## Claims

**1.** A solid electrolyte composition comprising:

an inorganic solid electrolyte (A) having conductivity of ions of metals belong to Group I or II of the periodic table;
a polymer (B); and
a dispersion medium (C),
wherein the polymer (B) includes a constituent component derived from a macromonomer satisfying (Condition 1) to (Condition 3) below,

(Condition 1) SP value of 19.0 $MPa^{1/2}$ or less,
(Condition 2) mass-average molecular weight of 1,000 or more, and
(Condition 3) having at least two groups represented by General Formula (1),

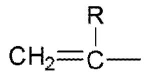 General Formula (1)

in the formula, R represents a hydrogen atom or a substituent.

**2.** The solid electrolyte composition according to claim 1, wherein the constituent component derived from the macromonomer is a constituent unit represented by General Formula (2),

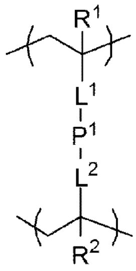 General Formula (2)

in the formula, $R^1$ and $R^2$ each independently represent a hydrogen atom, a cyano group, a halogen atom, or an alkyl group; $L^1$ and $L^2$ each independently represent a carbonyl group, an oxy group, an imino group, an alkylene group having 1 to 4 carbon atoms, a phenylene group, or a linking group formed by combining at least two of the above-described groups; and $P^1$ represents a polyalkylene group, a polysiloxane linking group, a halogen atom-containing polyalkylene group, a polyalkenylene group, a polyether group, or a polyester group.

**3.** The solid electrolyte composition according to claim 1 or 2, wherein Clog P of the dispersion medium (C) is 3 or more.

**4.** The solid electrolyte composition according to any one of claims 1 to 3, wherein the polymer (B) is present as particles having an average particle diameter of 10 to 1,000 nm.

**5.** The solid electrolyte composition according to any one of claims 1 to 4, wherein the inorganic solid electrolyte (A) is represented by Formula (I),

$$L_{a1}M_{b1}P_{c1}S_{d1}A_{c1} \quad \text{Formula (I)}$$

in the formula, L represents an element selected from Li, Na, and K; M represents an element selected from B, Zn, Sn, Si, Cu, Ga, Sb, Al, and Ge; A represents an element selected from I, Br, Cl, and F; a1 to e1 represent the compositional ratios among the respective elements; and al:bl:cl:dl:el satisfies 1 to 12:0 to 5:1:2 to 12:0 to 10.

**6.** The solid electrolyte composition according to any one of claims 1 to 5, wherein a proportion of the constituent component derived from a macromonomer in all of constituent components of the polymer (B) is 15% by mass or more and less than 40% by mass.

**7.** The solid electrolyte composition according to any one of claims 1 to 6, wherein the polymer (B) includes a repeating unit derived from a monomer represented by Formula (a-11) or (a-12),

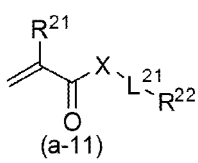
(a-11)

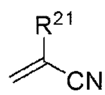
(a-12)

in the formula, $R^{21}$ represents a hydrogen atom, a cyano group, a halogen atom, or an alkyl group; X represents a single bond, an oxygen atom, or $>NR^N$; $R^N$ represents a hydrogen atom or an alkyl group having 1 to 12 carbon atoms; $L^{21}$ represents a linking group; and $R^{22}$ represents a substituent.

**8.** The solid electrolyte composition according to any one of claims 1 to 7, wherein the polymer (B) contains 30% by

mass or more of a repeating unit derived from a monomer having an SP value of 21.5 $MPa^{1/2}$ or more.

**9.** The solid electrolyte composition according to any one of claims 1 to 8, wherein the dispersion medium (C) is at least one of a ketone compound solvent, an ether compound solvent, an ester compound solvent, or an aliphatic compound solvent.

**10.** The solid electrolyte composition according to any one of claims 1 to 9, further comprising:
an active material (D) capable of intercalating and deintercalating ions of metals belonging to Group I or II of the periodic table.

**11.** A solid electrolyte-containing sheet comprising a layer made of the solid electrolyte composition according to any one of claims 1 to 10.

**12.** An all-solid state secondary battery comprising:

a positive electrode active material layer;
a negative electrode active material layer; and
a solid electrolyte layer,
wherein at least any of the positive electrode active material layer, the negative electrode active material layer, or the solid electrolyte layer is a layer made of the solid electrolyte composition according to any one of claims 1 to 10.

**13.** A method for manufacturing a solid electrolyte-containing sheet comprising:
a step of applying the solid electrolyte composition according to any one of claims 1 to 10 onto a base material.

**14.** A method for manufacturing an all-solid state secondary battery comprising:
a step of forming at least one layer of the positive electrode active material layer, the negative electrode active material layer, or the solid electrolyte layer using the manufacturing method according to claim 13.

FIG. 1

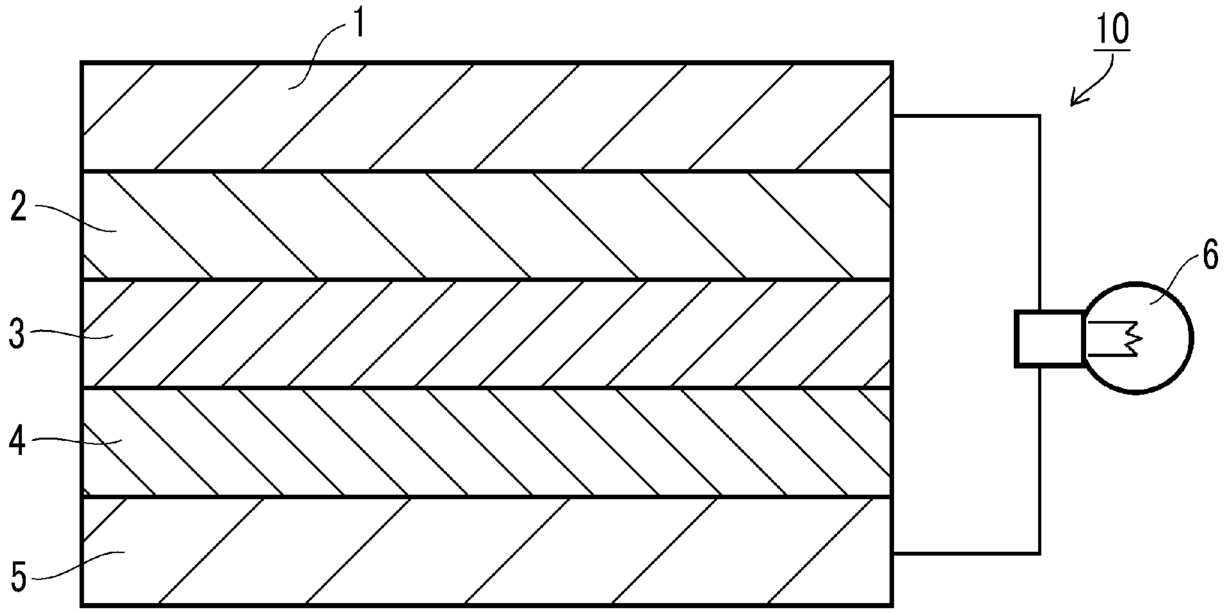


FIG. 2

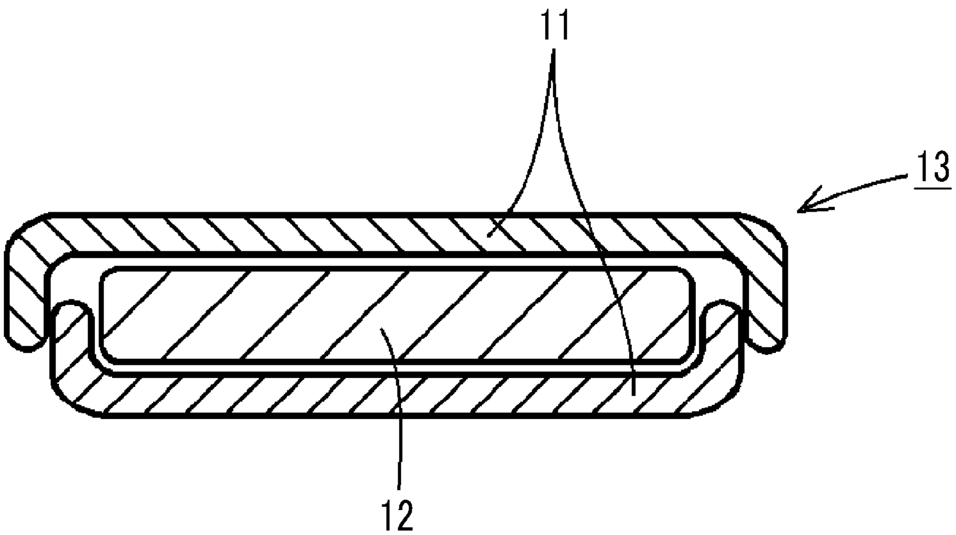

## INTERNATIONAL SEARCH REPORT

International application No.
PCT/JP2018/034050

A. CLASSIFICATION OF SUBJECT MATTER
Int.Cl. H01M10/0562(2010.01)i, H01M4/62(2006.01)i, H01M10/052(2010.01)i, H01M10/058(2010.01)i

According to International Patent Classification (IPC) or to both national classification and IPC

B. FIELDS SEARCHED

Minimum documentation searched (classification system followed by classification symbols)
Int.Cl. H01M10/0562, H01M4/62, H01M10/052, H01M10/058

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X, Y | WO 2015/46314 A1 (FUJIFILM CORP.) 02 April 2015, claims, paragraphs [0010], [0017], [0028]-[0071], [0081], [0087], [0104], [0117], examples & US 2016/0204465 A1:claims, paragraphs [0014], [0028], [0045]-[0145], [0157], [0168], [0199], examples & CN 105580187 A & KR 10-2016-0046882 A | 1-14 |
| Y | WO 2012/173089 A1 (NIPPON ZEON CO., LTD.) 20 December 2012, claims, paragraphs [0018], [0020], [0021], [0028], examples & US 2014/0127579 A1:claims, paragraphs [0027], [0029], [0030], [0037], examples | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 October 2018 (16.10.2018) | 30 October 2018 (30.10.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012173089 A
- JP 2011014387 A
- JP 2015088486 A
- JP 2017177578 A


### Non-patent literature cited in the description


- *H. L. Hoy Journal of Painting,* 1970, vol. 42, 76-118
- **T. OHTOMO ; A. HAYASHI ; M. TATSUMISAGO ; Y. TSUCHIDA ; S. HAMGA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872, , 873